# NEUE EUROPÄISCHE PATENTSCHRIFT

(11) **EP 0 177 638 B2**
(45) Veröffentlichungstag und Bekanntmachung des Hinweises auf die Entscheidung über den Einspruch: **13.09.1995**
(45) Hinweis auf die Patenterteilung: 05.02.1992
(21) Anmeldenummer: 84113904.1
(22) Anmeldetag: 16.11.1984
(51) Int. Cl.: G02C 13/00

(54) **Verfahren zur Herstellung einer Brille**
Process for the production of spectacles
Procédé de fabrication d'une monture de lunettes

(30) Priorität: 02.10.1984 DE 3436133
(43) Veröffentlichungstag der Anmeldung: 16.04.1986
(73) Patentinhaber: EYEMETRICS-SYSTEMS AG, CH-7001 Chur (CH)
(72) Erfinder: Anger, Wilhelm, CH-7500 St. Moritz (CH); Steinhauer, Eric, La Canada, Ca. 91011 (US)
(74) Vertreter: Grams, Klaus Dieter, Dipl.-Ing.

(56) Entgegenhaltungen:
- DE-A- 2 644 460
- FR-A- 2 267 736
- US-A- 397 744
- SPIE, Vol. 166, Applications of Human Biostereometrics (NATO)(1978), Seiten 235-243
- "Brillenpassung nach einem Masssystem", Feinmechanik und Optik, 1955, Heft 11, S. 292 ff
- "Zur Praxis der Brillenanpassung nach den Gütebestimmungen - ein Hilfsgerät zur Messung der Anpasswerte" Erwin Hans, SOZ Nr. 10, 15. Oktober 1966
- "Die Grundlagen der Brillenanpassung", Peter Abel, Verlag Willy Schrickel, Düsseldorf 1952
- "Moiré Topographie", Applied Optics, Volume 9, S 1457 ff (Juni 1970)
- "Stereographische Topometrie von Cornea und Sklera", Dr.Wolfgang Grimm, NOJ 5/1984

## Beschreibung

Die Erfindung bezieht sich auf ein Verfahren zum Herstellen einer individuell angepaßten Brille aus zwei Rohgläsern und einer Fassung, die zumindest eine Brücke, zwei Stege, zwei Backen und zwei Bügel aufweist. Obwohl das erfindungsgemäße Verfahren besondere Vorteile bei der Herstellung von Brillen mit Korrektionswirkung hat, ist es auch anwendbar bei der Herstellung von Brillen ohne Korrektionswirkung, beispielsweise bei der Herstellung von Sonnenschutzbrillen. Der Begriff "Fassung" schließt im Zusammenhang mit der Erfindung außer den üblichen Kunststoff-Fassungen, Metallfassungen, kombinierten Fassungen und Fassungen für randlose Brillen auch sogenannte Garnituren für Beschlagbrillen bzw. Glasbrillen ein, bei denen die Brillengläser weder oben noch unten von einem Fassungsrand umschlossen sind und bei denen die mechanische Verbindung zwischen der Brücke und jeder der Backen bzw. jedem der Gelenkstücke allein vom jeweiligen Brillenglas bewirkt ist.

Die Fassung der Brille soll die beiden Brillengläser in solcher Stellung vor den Augen des Brillenträgers halten, daß die Brillengläser die gewünschte Funktion erfüllen können. Die Fassung ihrerseits muß sich am Kopf abstützen, und zwar ist sie mit ihren Stegen an der Nase und mit den Endstücken der Bügel im Bereich der Ohren am Schädel und/oder den Ohren abgestützt. Wegen der individuellen Unterschiede von Brillenträger zu Brillenträger führt eine unzureichende Berücksichtigung der Merkmale des Gesichts, der Ohren und des übrigen Kopfes des Brillenträgers zu schlechtem Sitz der Brille. Dies kann sich äußern in zu starkem Druck an den Kontaktflächen, was wiederum Druckstellen, Schmerzen und Beschwerden verursachen kann, in einem zu leichten Verrutschen der Brille, in von den Sollstellungen der Brillengläser abweichenden tatsächlichen Stellungen vor den Augen und in einer starken Beeinträchtigung des Aussehens des Brillenträgers und somit seines Wohlbefindens. Daher wird allgemein gefördert, daß eine Brille gut sitzt, weswegen im Zuge der Herstellung einer Brille üblicherweise eine sogenannte mechanische Anpassung erfolgt, durch die die die Kontaktflächen berührenden Elemente der Brille bzw. Fassung in Stellungen gebracht werden sollen, die "richtigen" Sitz gewährleisten.

Ein übliches Verfahren zum Herstellen einer Brille wird im folgenden näher am Beispiel einer Brille mit Korrektionswirkung erläutert, da eine Brille mit Korrektionswirkung vom Brillenträger üblicherweise ständig getragen wird und somit der Anpassung einer Brille mit Korrektionswirkung im Hinblick auf das Wohlbefinden des Brillenträgers und die erzielte Korrektionswirkung besondere Bedeutung zukommt.

Bei diesem üblichen Verfahren wird in der Weise vorgegangen, daß dem Brillenträger Musterbrillen gezeigt und aufgesetzt werden, in die keine Brillengläser oder lediglich nicht brechende Brillengläser eingesetzt sind. Anhand dieser Musterbrillen wählt der Brillenträger ein bestimmtes Brillenmodell, wodurch er beispielsweise die Fassungsart (Kunststoff-Fassung oder Metallfassung oder Fassung für randlose Brille usw.), die Fassungsform, den Fassungswerkstoff, die Fassungsfarbe und auch Form und Größe der Brillengläser festlegt und wobei die Stellung der Brillengläser in senkrechter und horizontaler Richtung vor den Augen schon ungefähr festgelegt wird. Im Gesicht des Brillenträgers wird die für den Kontakt mit den Stegen des gewählten Fassungsmodells bestimmte Kontaktfläche der Nase durch eine Messung der Nasenrückenbreite erfaßt, wobei diese Messung durch Anlegen eines Maßstabs erfolgt. Aufgrund dieser Messung wird dann für die herzustellende Brille die Brückenweite bestimmt. Bei einer Fassung, bei der mit der Brückenweite der Abstand der Seitenstege gekoppelt ist, ist somit auch eine Stegbestimmung unter Berücksichtigung der Kontaktflächenmessung (durch Messung der Nasenrückenbreite) erfolgt. Außerdem werden am Kopf des Brillenträgers durch Anlegen eines Maßstabes an die Schläfe der ungefähre Abstand zwischen einer Projektion der Nasenrückenwurzel auf dem Maßstab und dem Ohr gemessen, um daraus die Bügellänge festzulegen. Schließlich werden noch mit Hilfe eines Tasters der Abstand von Schläfe zu Schläfe sowie der Abstand von Ohrwurzel zu Ohrwurzel gemessen. Im weiteren wird dann zur Herstellung der Brille eine Fassung benutzt, die die bestimmte Brückenweite und dadurch die bestimmten Stege sowie die bestimmten Bügellängen hat, wobei die Bügel derart ausgerichtet sind, daß ihr Mindestabstand gleich dem Abstand von Schläfe zu Schläfe ist und daß diejenigen Stellen der Bügel, die nahe den Ohrwurzeln zu liegen kommen, den gemessenen Ohrwurzelabstand haben. Obwohl diese Fassung in einigen Punkten schon den individuellen Bedürfnissen des Brillenträgers angepaßt ist, ist das Ausmaß der mechanischen Anpassung für einen guten Sitz noch unzureichend.

Im weiteren Zuge dieses Herstellungsverfahrens wird daher die Fassung durch Anprobieren dem Brillenträger weiter angepaßt. Die auf vorstehende Weise vorbereitete Fassung wird dem Brillenträger aufgesetzt, und einerseits aufgrund des Augenscheins des Anpassers sowie andererseits aufgrund der Angaben des Brillenträgers wird die Fassung verändert. Dies kann geschehen durch Biegen der Bügel, der Bügelendstücke, der Gelenke, gegebenenfalls der Stegstützen, durch plastisches Verformen unter Wärme bei thermoplastischen Fassungswerkstoffen und durch Materialabtragen, insbesondere Abfeilen von Fassungsmaterial. Der Erfolg dieses Anpassens hängt erheblich vom handwerklichen Geschick des Anpassers sowie der Mitwirkung des Brillenträgers ab, dessen subjektives Empfinden schließlich die einzige Information für weitere Änderungen der Fassung ist. Es liegt auf der Hand, daß die Gefahr einer fehlerhaften Anpassung groß ist, denn beispielsweise einem vom Brillenträger gemeldeten starken Druck an einem der beiden Ohren wird üblicherweise durch Verformen des zugeordneten Bügelendstücks entgegengewirkt, obwohl es verursacht sein kann durch ungeeignete Form des Bügelendstücks am anderen der beiden Ohren oder der Stege.

Obwohl das Ergebnis der vorstehend beschriebenen subjektiven mechanischen Anpassung häufig keinen optimalen Tragekomfort erbringt, gilt die Fassung danach als mechanisch angepaßt. Im Falle einer Brille ohne Korrektionswirkung ist die Gesamt-Anpassung damit beendet, da keine optische Anpassung der Brillengläser zu erfolgen braucht; diese können vor oder nach der subjektiven mechanischen Anpassung mit der Fassung zusammengefügt werden. Die Stellung, in der die Fassung die Brillengläser nach erfolgter mechanischer Anpassung relativ zu den Augen des Brillenträgers hält, ist die Sollstellung der Brillengläser. Als Sollstellung ist vorliegend diejenige Stellung der beiden Brillengläser relativ zu zumindest zwei den Augen zugeordneten Bezugspunkten definiert, in der die Fassung die Brillengläser am Brillenträger halten soll. Die Sollstellung kann vor der Herstellung der Brille beispielsweise mit den Rezeptwerten vorgegeben werden oder auch erst während der Herstellung der Brille definiert werden. Bei dem hier erläuterten bekannten Verfahren werden die Sollstellungen der einzelnen Brillengläser nicht von vornherein vorgegeben, sondern durch die mechanische Anpassung festgelegt, indem die sich zwangsläufig im Zuge der mechanischen Anpassung einstellenden Stellungen für die beiden Brillengläser als deren Sollstellungen akzeptiert und definiert werden.

Die Korrektionswirkung eines Brillenglases hängt von seiner Stellung im Raum relativ zum zugeordneten Auge ab. Dem Rezeptwert, d.h. der aufgrund einer Refraktionsbestimmung vorgeschriebenen dioptrischen Wirkung des Brillenglases, liegt die Annahme einer bestimmten Stellung des Brillenglases relativ zum Auge zugrunde, beispielsweise ein Scheitelabstand von 12 mm. Insoweit, als sich diese bestimmte, dem Rezeptwert zugrundeliegende Stellung von der Sollstellung der Brille unterscheidet, ist eine Berichtigung bzw. Korrektur des Rezeptwertes notwendig, wenn die Brille optisch angepaßt sein soll. Um diese optische Anpassung zu ermöglichen, können daher bei dem üblichen Vorgehen im Anschluß an die mechanische Anpassung eine Reihe von Messungen vorgenommen, zu denen die Messung des Augenabstands, die Messung des Scheitelabstandes, die Messung der Vorneigung bzw. Vorbiegung der Brillenglasebene und gegebenenfalls die Messung der Seitenneigung der Brillenglasebene und die Messung der Nahteilhöhe gehören. Aufgrund dieser Messungen werden die erforderlichen Korrekturen bzw. Berichtigungen der Rezeptwerte sowie gegebenenfalls Dezentrationen bestimmt und die Brillengläser dementsprechend gefertigt. Die vorstehend genannten Messungen, die mit Ausnahme der Augenabstandsmessung sämtlich bereits die mechanisch angepaßte Fassung einbeziehen, werden bei der mechanischen Anpassung nicht berücksichtigt und beeinflussen deren Güte nicht. Die auf diese Weise gefertigten Brillengläser werden mit der mechanisch angepaßten Fassung zusammengefügt, so daß eine fertige Brille vorliegt, die optisch angepaßt ist und nach dem Stand der Technik auch mechanisch angepaßt ist.

Es hat sich jedoch gezeigt, daß nach diesem bekannten Verfahren hergestellte Brillen häufig noch Beschwerden verursachen und unsicheren Sitz haben, wofür eine offenbar unzureichende mechanische Anpassung als Ursache vermutet wird.

Um das mechanische Anpassen von Brillen zu erleichtern, ist eine Nasenprofilschablone bekannt (FR-PS 22 67 736), die es ermöglicht, ein zweidimensionales Profil der Nase eines Brillenträgers abzutasten und mechanisch nachzubilden. Mit Hilfe des nachgebildeten Profils kann die Auswahl der Musterbrillen erleichtert werden, indem offensichtlich im Stegbereich nicht passende Musterbrillen dem Brillenträger nicht erst aufgesetzt werden, und kann eine grobe Kontrolle der individuell vorgefertigten Brille erfolgen. Dies erleichtert möglicherweise dem Anpasser die Arbeit. Eine höhere Genauigkeit bei der Anpassung und mechanisch besserer Sitz der Fassung sind mit dieser Schablone nicht erreichbar.

Ferner ist es bereits bekannt ("Die Statik in der Brillenanpassung", Heft 2, "Sehhilfen mit verbessertem Tragekomfort durch eine neue Anpaßtechnik" von Günther Fischbach, Karlsruhe, Pfinztalstr. 38, im Selbstverlag), zur Verbesserung der mechanischen Anpassung eine Bestimmung des durch Stege an der Nase hervorgerufenen Drucks vorzunehmen. Zu diesem Zweck wird der Nasenkeilwinkel gemessen, d.h. der Winkel, den die beiden Nasenflanken in der Fassungsebene einnehmen, wird die Größe der Fläche bestimmt oder geschätzt, in der sich der Steg und die Nase berühren und wird das Gewicht der Brille errechnet oder durch Wägung bestimmt. Der deraus ermittelte Druck soll durch Vergleich mit den zulässigen oder optimalen Druckwerten die Aussage ermöglichen, wie bequem die Brille getragen werden kann. Dies verbessert die Möglichkeiten des Anpassers, den Brillenträger zu beraten, und beinhaltet die Möglichkeit, bestimmte Fassungsmodelle, die zu zu hohen Drücken führen würden, als ungeeignet auszuscheiden. Zu besseren Ergebnisen bei der eigentlichen mechanischen Anpassung, wie sie oben beschrieben ist und bei der versucht wird, die Bügel, die Bügelendstücke und die Stege in geeignete Stellungen zu bringen, führt diese rechnerische Druckbestimmung jedoch nicht.

Ein Verfahren zum Herstellen einer individuell angepaßten Brille ist durch die US-PS 397 744 bekannt. Bei diesem bekannten Verfahren kommt eine einstellbare Meßbrille zur Anwendung, die dem Brillenträger aufgesetzt wird. Die Meßbrille weist horizontal verschiebbare Brillenglasschablonen auf, deren Mitten vor den Augenmitten angeordnet werden. Außerdem weist die Meßbrille einen Nasenprofiltaster auf, der aus mehreren in einer senkrechten Ebene angeordneten und verschiebbaren Tastelementen besteht. Diese Tastelemente werden in Berührung mit dem Nasenrücken gebracht, wobei die Positionierung der Brillenglasschablonen vor den Augenmitten beibehalten wird. Ferner wird der Abstand zwischen der Ebene der Tastelemente und der Ebene der Brillenglasschablonen derart eingestellt, daß die Brillenglasschablonen die Augenwimpern gerade nicht berühren. Schließlich werden die in sich hinsichtlich ihrer Größe verstellbaren Brillenglasschablonen auf die gewünschte Brillenglasgröße eingestellt.

Mit Hilfe von an der Meßbrille bzw. einer weiteren Vorrichtung geeignete angebrachten Nadeln und Messern werden die Positionen der Tastelemente und der Brillenglasschablonenmitten auf ein Meßblatt übertragen. Entsprechend den auf dem Meßblatt fixierten Meßergebnissen wird dann die Brille individuell gefertigt.

In diesem bekannten Fall werden somit die Orte der beiden Augenmitten und die Orte von mehreren Nasenpunkten, die in den für den Kontakt mit dem Steg bestimmten Kontaktflächen der Nase liegen, in einem zweidimensionalen Koordinatensystem gemessen. Als Sollstellung der Brillengläser ist vorgegeben, daß letztere die Wimpern gerade nicht berühren.

Bei diesem bekannten Verfahren ist somit die bereits vorstehend beschriebene, herkömmliche Endanpassung der Brille ersetzt durch das Anpassen der Meßbrille. Wegen der Verstellmöglichkeiten der Meßbrille läßt sich diese einfacher und genauer anpassen als eine vorangepaßte Fassung. Die Anpassung der Meßbrille ist jedoch in gleicher Weise vom handwerklichen Geschick des Anpassers und vom subjektiven Empfinden des Brillenträgers abhängig, wodurch die Zuverlässigkeit der Messungen beeinträchtigt ist. Ferner können nach diesem, bekannten Verfahren nur solche Brillen gefertigt werden, die hinsichtlich des Steges, der Brillenglasform und der Brillenglasgröße ein genaues Duplikat der entsprechenden Elemente der Meßbrille sind; dies bedeutet, daß für jedes Fassungsmodell eine entsprechende Meßbrille vorhanden sein muß. Unbefriedigend ist auch, daß lediglich ein linienförmiger Steg in Frage kommt, weil nur eine linienförmige Messung der Kontaktfläche erfolgt. Schließlich ist eine durch die Wimpernlänge definierte Sollstellung der Brillengläser ebenfalls unbefriedigend, und zwar insbesondere im Hinblick auf die optisch korrekte Positionierung derselben.

Schließlich ist es bekannt, mit Hilfe eines fotogrammetrischen Verfahrens Gesichter von Brillenträgern räumlich fotografisch zu erfassen und daraus Primärdaten für die Brillenfassungsherstellung zu gewinnen (SPIE Vol. 166 Applications of Human Biostereometrics (NATO) (1978), Seiten 235 bis 243). Dabei werden durchschnittliche Nasenprofile und durchschnittliche Abstände wie beispielsweise durchschnittliche Augenabstände, durchschnittliche Abstände der Nasenwurzel von der Ohrwurzel in Seitenansicht, durchschnittliche Ohrwurzelabstände und dergleichen gemessen. Die daraus resultierenden Meßergebnisse mögen es dem Brillenhersteller erleichtern, Fassungen für Brillenträger zu liefern, bei denen einzelne Maße den Durchschnittsmaßen entsprechen; die subjektive, mechanische Anpassung muß jedoch auch für solche Fassungen auf gleiche Weise durchgeführt werden, wie sie vorstehend ausführlich erläutert ist.

Der Erfindung liegt die Aufgabe zugrunde, ein Verfahren zum Herstellen einer Brille zu schaffen das eine verbesserte mechanische Anpassung ermöglicht.

Diese Aufgabe wird erfindungsgemäß dadurch gelöst, daß dem Gesicht des Brillenträgers ein dreidimensionales Koordinatensystem zugeordnet wird, daß zum Vermessen und Herstellen des Mittelteils und der Bügel der Brille das Gesicht des Brillenträgers bei Betrachtung im wesentlichen von vorn optisch vermessen wird, daß zumindest von den folgenden Punkten die dreidimensionalen Koordinaten ermittelt werden:
a) den beiden Augenmitten;
b) je drei eine Fläche definierenden Nasenpunkten in oder nahe einer ersten Kontaktfläche jeder Nasenflanke, die für den Kontakt mit der Auflagefläche eines von zwei Stegen der Brille bestimmt ist,
c) je einem Wangenpunkt im Wangenbereich unterhalb jedes Auges, von dem die nächstliegende Brillenglas- oder Fassungsfläche einen Mindestabstand einhalten soll;
d) je zwei Marken zweier Taster, von denen jeder an einer zweiten Kontaktfläche, die hinter dem jeweiligen Ohr für den Kontakt mit einem Bügelendstück der Brille bestimmt ist, angelegt ist und aus dem vom Ohr und Schädel abgeschatteten Bereich vorsteht,

und daß die Brille aufgrund der so ermittelten Maße aus Einzelteilen entsprechender Form und Größe hergestellt wird.

Beim erfindungsgemäßen Vorgehen werden im Gesicht des Brillenträgers für jeden Steg der Brille von drei Nasenpunkten deren Orte im Raum und somit dreidimensional gemessen. Diese drei Nasenpunkte liegen in oder nahe der jeweiligen Kontaktfläche der Nase, die bei aufgesetzter Brille in Kontakt mit der zugeordneten Auflagefläche des jeweiligen Steges steht. Damit sind diese drei Nasenpunkte ein Maß dafür, wo sich die Auflagefläche des jeweiligen Steges bei aufgesetzter Brille in dem dem Gesicht zugeordneten dreidimensionalen Koordinatensystem befinden soll, damit bei aufgesetzter Brille die Auflageflächen die zugeordneten Kontaktflächen berühren. Dabei erfolgt die Nasenpunktmessung in demselben Koordinatensystem in dem auch die dreidimensionalen Koordinaten der beiden Augenmitten gemessen werden, relativ zu denen die Brillengläser ihre Sollstellung einnehmen. Damit liefert aber die Nasenpunktmessung zugleich eine räumliche Zuordnung zwischen den gemessenen Nasenpunkten und den Brillengläsern in ihrer Sollstellung, so daß auch die den jeweiligen Nasenpunkten zugeordnete Lage der Auflagefläche des Steges im Raum relativ zu den Brillengläsern festlegbar ist. In dieser räumlichen Beziehung werden dann an der Brille die jeweilige Auflagefläche und die Brillengläser ausgebildet, so daß ein Brillenmittelteil geschaffen ist, bei dem die Stege und die Brillengläser sowohl optisch als auch mechanisch einander in räumlich korrekter Beziehung zugeordnet sind: Wenn sich die Brillengläser in ihrer Sollstellung vor den Augen befinden, haben die Auflageflächen solche Orte und Ausrichtungen im Raum, die aufgrund der individuellen Lage der Nasenpunkte des Brillenträgers von den Auflageflächen eingenommen werden müssen, damit sie in Kontakt mit den zugeordneten Kontaktflächen stehen. Dies bedeutet optimale mechanische Anpassung des Mittelteils der Brille. Wenn sich die Auflageflächen in Kontakt mit den zugeordneten Kontaktflächen der Nase befinden, hält die Fassung die Brillengläser in ihrer Sollstellung. Bei der erfindungsgemäß hergestellten Brille sind somit Einnahme der Sollstellung durch die Brillengläser und Einnahme des korrekten Ortes und der korrekten Ausrichtung der Auflagefläche durch den jeweiligen Steg, d.h. korrekte mechanische Anpassung, miteinander gekoppelt. Wenn im Falle einer Brille mit Korrektionswirkung die Brillengläser für ihre Sollstellung optisch angepaßt sind bzw. die Sollstellung mit der dem Rezeptwert zugrundeliegenden Stellung übereinstimmt, ist die erfindungsgemäß hergestellte Brille zugleich optisch angepaßt und auch einwandfrei mechanisch angepaßt.

Die Bestimmung des Ortes und der Ausrichtung der Auflagefläche eines jeden Steges aufgrund der Nasenpunktmessung erfolgt in der Weise, daß für die Auflagefläche gefordert wird, daß sie einerseits die zugeordnete Kontaktfläche berührt (und nicht einen Luftzwischenraum zu dieser freiläßt) und daß sie andererseits die Kontaktfläche nicht über ein geringes Maß eindrückt, das durch die Eigenschaften der Haut im Bereich der Kontaktflächen gegeben ist. Wenn diese beiden Grenzbedingungen eingehalten sind, ist einerseits gewährleistet, daß die Auflagefläche in Kontakt mit der Kontaktfläche steht und dadurch der zugeordnete Steg seine Stützfunktion erfüllen kann und daß andererseits die Haut im Bereich der Kontaktfläche nicht übermäßig verformt wird. Es kann als zweckmäßig vorgegeben werden, daß sich die noch unbelastete Kontaktfläche, d.h. die Kontaktfläche im Zustand während der Nasenpunktmessung, und die Auflagefläche drucklos berühren, so daß ein Nasenpunkt in der Kontaktfläche zugleich auch Punkt der Auflagefläche nach deren Ortsfestlegung im Raum ist.

Je nach der Form der Kontaktfläche ist eine hinreichende Bestimmung des Ortes der Auflagefläche des jeweiligen Steges auch dann möglich, wenn die gemessenen Nasenpunkte nicht in, sondern nahe der Kontaktfläche liegen. Für das Ausbilden der Brille mit dem bestimmten Ort und der bestimmten Ausrichtung der Auflagefläche des jeweiligen Steges bestehen verschiedene Möglichkeiten, darunter die herkömmlichen und oben beschriebenen des Feilens und Anformens unter Wärme im Falle von einstückig an die Fassung bzw. deren Brücke angeformten Stegen, des Anbiegens im Falle von beispielsweise stiftförmigen Stegstützen aus Metall oder auch der Auswahl eines geeigneten Steg- oder Brückenbauteils aus einer größeren Anzahl von mit unterschiedlichen Auflageflächen ausgebildeten Bauteilen, wobei dann das ausgewählte Bauteil an der übrigen Fassung befestigt wird. Es versteht sich, daß die vorstehende Aufzählung von Möglichkeiten zur Ausbildung der Brille mit den bestimmten Orten und Ausrichtungen der Auflageflächen nicht abschließend ist.

Vorstehend ist ausführlich erläutert, daß die zwei Auflageflächen der Brille, die in Kontakt mit dem Gesicht des Brillenträgers stehen, aufgrund von dreidimensionalen Messungen am Brillenträger derart ausgebildet sind, daß die betreffenden Flächen dem Brillenträger individuell optimal angepaßt sind. Eine Brille weist außer Flächen, die im Kontakt mit dem Brillenträger stehen sollen, auch Elemente und Flächen auf, die möglichst nicht im Kontakt mit dem Brillenträger stehen sollen, weil ein solcher Kontakt störend wäre. Mit einem solchen störenden Kontakt muß hauptsächlich an den unteren und den inneren Rändern der Brillengläser bzw. den dort befindlichen Fassungsrändern gerechnet werden.

Daher ist bei der Erfingung vorgesehen, daß die Orte von kollisionsgefährdeten Punkten, d.h. von Punkten, an denen eine Berührung vermieden werden soll, im Raum gemessen werden und die Brille derart ausgebildet wird, daß die entsprechenden Brillenelemente hinreichenden Abstand zu diesen Punkten haben. Insgesamt sechs solcher kollisionsgefährdeter Punkte sind durch die Nasenpunktmessung erfaßt. Als weitere Kollisionsgefährdete Punkte werden erfindungsgemäß die Wangenpunkte dreidimensional gemessen.

Durch das erfindungsgemäße Verfahren, soweit es bisher beschrieben wurde, wird eine Brille geschaffen, bei der das System aus Augen, Brillengläsern und den auf der Nase aufsitzenden Stegen mechanisch und optisch in sich abgestimmt ist. Dieses System muß durch die Bügel der Brille gesichert werden, wozu jeder der Bügel für Verankerung bzw. Abstützung der Brille am zugeordneten Ohr und/oder am Schädel im Bereich des Ohres sorgt. Wegen des dort somit vorhandenen Kontaktes zwischen den Bügelenden und den Ohren und/oder dem Schädel muß auch in diesem Bereich eine mechanische Anpassung ausgeführt werden.

Bei der Erfindung erfolgt auch im Bereich der Ohren die Messung der dreidimensionalen Koordinaten zumindest eines für die Bügelformgebung maßgeblichen Punktes in demselben Koordinatensystem, in dem die Augenmitten, Nasenpunkte und Wangenpunkte gemessen Werden. Aufgrund dieser Messung wird dann festgelegt, wie der jeweilige Bügel im Raum relativ zu den Brillengläsern und somit relativ zu den übrigen Fassungsteilen angeordnet sein soll und ausgebildet wird.

Auf jeder Kopfseite des Brillenträgers ist für den Kontakt mit einem Bügelendstück eine zweite Kontaktfläche am Schädel und/oder Ohr vorgesehen. Bei der Erfindung ist vorgesehen, daß die dreidimensionalen Koordinaten zumindest eines Ohrpunktes in oder nahe jeder der zweiten Kontaktflächen des Schädels und/oder des Ohrs gemessen werden, daß aus dieser Ohrpunktmesung der Ort der Anlagefläche jedes Bügelendstücks bestimmt wird und daß die Brille durch entsprechende Auswahl oder durch Ausrichten jedes Bügelendstücks mit diesem bestimmten Ort der Bügelendstück-Anlagefläche hergestellt wird.

Zur Ohrpunktmessung wird ein Taster an die zweite Kontaktfläche angelegt, der aus dem vom Ohr und Schädel bei Betrachtung des Gesichts von vorn abgeschatteten Bereich vorsteht. An jedem der beiden Taster sind je zwei Marken angebracht, deren dreidimensionale Koordinaten bei der optischen Vermessung des Gesichtes gemessen werden, so daß dadurch die Tasterstellung im Raum bekannt ist und dadurch wiederum der Ort des zumindest einen Ohrpunktes bestimmt wird.

Bei diesem Vorgehen entfällt jegliches manuelles mechanisches Anpassen und ist die gesamte mechanische Anpassung objektiviert, da die Orte und gegebenenfalls Richtungen aller in Kontakt mit dem Brillenträger stehenden Elemente der Brille im Raum aufgrund von Messungen der zugeordneten Punkte an der Nase und den Ohren bzw. dem Schädel des Brillenträgers festgelegt und ausgebildet sind. Für zahlreiche Anwendungsfälle und Bügelendstückausbildungen reicht es aus, den Ort eines Ohrpunktes zu messen. Dies gilt insbesondere dann, wenn das Bügelendstück eine Ausbildung hat, die eine gewisse selbständige Ausrichtung der Anlagefläche desselben am Ohr bzw. Schädel zuläßt. Es können aber auch für jedes Ohr die Orte mehrerer Ohrpunkte in oder nahe jeder zweiten Kontaktfläche gemessen werden und dementsprechend die Bügelendstück-Anlageflächen ausgerichtet werden. Die entsprechende Ausbildung der Bügelendstücke erfolgt beispielsweise durch Auswahl eines Bügelendstücks mit der bestimmten Form aus einem Sortiment verschieden geformter Bügelendstücke, durch Anbiegen, durch Feilen oder durch plastische Formung unter Wärmezufuhr.

Die optische, dreidimensionale Vermessung kann mit Hilfe eines beliebigen stereogrammetrischen Meßverfahrens durchgeführt werden, das auch für Messungen am Menschen und insbesondere im Gesicht geeignet ist. Stereoskopische Meßverfahren auf optischer Grundlage sind beispielsweise bekannt durch die US-PS 42 86 852, die US-PS 41 99 253 und die US-PS 42 38 147.

Wie es sich aus der vorstehenden Beschreibung der Erfindung ergibt, erfordert diese zum Zweck der mechanischen Anpassung keine Begutachtung des Sitzes der Fassung durch den Anpasser und keine Bewertung des Sitzes und Rückmeldung durch den Brillenträger. Diese subjektiven Bewertungen, die beim herkömmlichen Verfahren die Grundlage der mechanischen Anpassung sind, sind beim erfindungsgemäßen Verfahren - entbehrlich und durch objektive Messung ersetzt. Die Gefahr der unzureichenden Anpassung durch individuelle Fehlbeurteilung des Sitzes von Seiten des Brillenträgers oder des Anpassers ist somit beim erfindungsgemäßen Vorgehen verringert; dieses ermöglicht eine gleichbleibend hohe Güte der mechanischen Anpassung. Im Gegensatz zur subjektiven mechanischen Anpassung wird somit beim erfindungsgemäßen Verfahren eine objektive mechanische Anpassung ausgeführt. Die vorstehend erläuterte Eigenschaft des erfindungsgemäßen Verfahrens schließt jedoch nicht aus, daß gegebenenfalls zusätzlich zur objektiven mechanischen Anpassung eine Überprüfung des Sitzes der Brille durch den Anpasser sowie eine zusätzliche Korrektur erfolgen.

Wie sich ferner aus der vorstehenden Beschreibung der Erfindung ergibt, ist es zum Zwekke der mechanischen Anpassung der Fassung nicht erforderlich, daß diese körperlich vorhanden ist und dem Brillenträger aufgesetzt wird. Der Schritt des Vergleichens der zusammengefügten, für den Brillenträger bestimmten individuellen Fassung mit den individuellen Kennzeichen des Brillenträgers, wie er bei dem erläuterten üblichen Verfahren die Grundlage der mechanischen Anpassung bildet, ist beim erfindungsgemäßen Verfahren durch die optische dreidimensionale Vermessung ersetzt, was offensichtlich keine vorbereitete Fassung voraussetzt. Dies eröffnet eine Reihe von neuen Möglichkeiten bei der Brillenherstellung. So kann beispielsweise die Vermessung vorgenommen werden durch einen Anpasser, der keine Erfahrung auf dem Gebiet der herkömmlichen mechanischen Anpassung hat und dem die individuelle Fassung zur Anpassung nicht zur Verfügung steht. Zudem kann die Vermessung als Grundlage für die mechanische Anpassung der Brille durchgeführt werden, bevor überhaupt mit der körperlichen Herstellung der individuellen Fassung begonnen wird. Wenn von dieser Möglichkeit Gebrauch gemacht wird, ist die herkömmliche Schrittfolge "zunächst Fassungsherstellung und dann mechanische Anpassung der vorgefertigten Fassung" durch die Erfindung umgekehrt zu bzw. ersetzt durch die Schritffolge "erst Erfassung der für die mechanische Anpassung erforderlichen Daten und dann Herstellung der (bereits mechanisch angepaßten) Fassung".

Da beim erfindungsgemäßen Vorgehen der Ort der Auflagefläche des jeweiligen Steges in räumlicher Beziehung zu den Brillengläsern in ihrer Sollstellung vor den Augen festgelegt und an der Brille realisiert wird, ist es beim erfindungsgemäßen Verfahren auf einfache Weise möglich, die Sollstellung für das jeweilige Brillenglas vorzugeben. Beim herkömmlichen Vorgehen ist es äußerst aufwendig. eine vorgefertigte Fassung mechanisch derart auszubilden, daß sie sowohl mechanisch angepaßt ist als auch die Brillengläser in einer Sollstellung hält, die ohne Kenntnis der sich durch die mechanische Anpassung ergebenden Anordnung der Fassung im Gesicht des Brillenträgers vorgegeben wird. Aus diesem Grunde wird daher bei dem einleitend beschriebenen herkömmlichen Verfahren die nach Beendigung der mechanischen Anpassung vorliegende Stellung der Brillengläser als Sollstellung definiert. Die sich daraus möglicherweise ergebenden optischen Nachteile sind bei der Erfindung ebenso vermieden wie die Notwendigkeit, hohen handwerklichen Aufwand zu treiben, um eine vorgegebene Sollstellung an der Brille zu realisieren. Schließlich ermöglicht das erfindungsgemäße Verfahren bei der Herstellung von Brillen mit Korrektionswirkung die Herstellung von sowohl mechanisch als auch optisch angepaßten Brillen in einem Arbeitsgang, d.h. ohne daß die Brille zum Zweck der mechanischen Anpassung in Gegenwart und mit Hilfe des Brillenträgers die Werkstatt verlassen muß, bevor die Brillengläser fertiggestellt und mit der Fassung zusammengefügt werden können. (Die Herstellung von Brillen in einem Werkstatt-Arbeitsgang ist bereits bekannt und ist sogar das am häufigsten angewendete Vorgehen; dabei wird dann jedoch die optische Anpassung nicht durchgeführt, so daß die Brille herkömmlich und somit häufig unzureichend mechanisch angepaßt ist, optisch jedoch nicht.)

Die Vorgabe der Sollstellung der Brillengläser erfolgt vorzugsweise gemäß Anspruch 3. Dabei wird im einzelnen in der Weise vorgegangen, daß zunächst rechnerisch und/oder grafisch die Brillengläser mit gewählter Form, gewählter Größe, gewählter Brückenweite und dioptrischen Wirkungen entsprechend dem Rezeptwert vor den Augen in einer ersten Sollstellung angeordnet werden. Bei dieser Sollstellung kann es sich um eine unter optischen und ästhetischen Gesichtspunkten gewählte Stellung handeln, in der beispielsweise die Brillengläser einen Scheitelabstand von 12 mm, eine gewisse Vorneigung und eine gewisse Seitenneigung haben. Rechnerisch und/oder grafisch erfolgt dann die Bestimmung der kleinsten Abstände der beiden Brillengläser (einschließlich gegebenenfalls vorhandener Fassungsränder) von den Orten der gemessenen Wangenpunkte sowie von den gemessenen Nasenflanken. Wenn einer dieser Abstände kleiner als der hierfür vorgegebene Mindestabstand ist, wird das jeweilige Brillenglas rechnerisch und/oder grafisch so weit vom Auge entfernt und dadurch in eine zweite Sollstellung gebracht, daß der betreffende Mindestabstand eingehalten ist. Hierfür kann beispielsweise nach dem Schema vorgegangen werden, daß zunächst der Scheitelabstand um ein bestimmtes Maß vergrößert wird und daß dann, wenn dies nicht ausreicht, die Vorneigung oder die Seitenneigung geändert wird. Auf diese Weise wird eine Sollstellung für die Brillengläser ermittelt, in der die Brillengläser die geforderten Mindestabstände einhalten und somit Kollisionen im gewünschten Ausmaß verhindert sind. Unter Zugrundelegung dieser Sollstellung erfolgt dann die Festlegung der Orte der den gemessenen Nasenpunkten zugeordneten Steg-Auflageflächen relativ zu den Brillengläsern.

Bei der vorstehenden Erläuterung der vorteilhaften Ausgestaltung der Erfindung ist die Sollstellung der Brillengläser Ergebnis der Messung von Orten von Punkten im Gesicht des Brillenträgers und der Auswertung dieser Messung. Dies zeigt, daß die Sollstellung ihrerseits durch Messungen bestimmt sein kann und daß sie sich von einer Annahme ausgehend bis zur endgültigen Festlegung verändern kann.

In vorteilhafter Ausbildung der Erfindung wird bei der Messung der Orte der gemessenen Nasenpunkte in der Weise vorgegangen, daß zwei der drei Koordinaten des Ortes des zu messenden Punktes vorgegeben werden und als dritte Koordinate der Abstand des Punktes von derdurch die beiden anderen Koordinaten definierten Ebene gemessen wird. Es versteht sich, daß es sich trotz der Vorgabe von zwei Koordinaten und Suche der dritten Koordinate zur Beschreibung des Ortes der betreffenden Nasenpunkte insgesamt um eine dreidimensionale Messung im Raum handelt, denn Ergebnis der Messung ist die Spezifizierung des Ortes durch alle drei Koordinaten

In vorteilhafter Ausbildung der Erfindung kann vorgesehen sein, daß zur Dimensionierung der Bügel der Brille zusätzlich für jedes Ohr die dreidimensionalen Koordinaten des oberen Ohrwurzelpunktes am Übergang zwischen Schädel und Ohrmuschel des Brillenträgers gemessen werden, daß aus dieser Ohrwurzelpunktmessung für den jeweiligen Bügel der Ort des Bügelübergangspunktes, an dem der vor dem Ohr befindliche Bügelabschnitt übergeht in das Bügelendstück und der sich oberhalb des oberen Ohrwurzelpunktes befindet, im Raum bestimmt wird und daß die Brille mit diesem bestimmten Ort des Bügelübergangspunktes hergestellt wird.

Als Bügelübergangspunkt ist derjenige Punkt am oder im Bügel definiert, an dem der vor dem Ohr befindliche Bügelabschnitt übergeht in das Bügelendstück und der sich oberhalb des oberen Ohrwurzelpunktes befindet. Die Bestimmung des Bügelübergangspunktes kann beispielsweise in der Weise erfolgen, daß sich dieser senkrecht über dem Ohrwurzelpunkt in einem geringen Abstand von beispielsweise 2 mm befindet. Es kann für den Bügelübergangspunkt aber auch eine andere Relativlage bezüglich des oberen Ohrwurzelpunktes vorgeschrieben werden. Der Bügelübergangspunkt hat dann eine im Raum definierte Lage relativ zum Mittelteil der Brille, die bei der Herstellung der Brille realisiert wird. Die Bügelendstücke haben dann lediglich die Aufgabe, dafür zu sorgen, daß sich die Bügelübergangspunkte tatsächlich in derjenigen Relativlage zu den Ohrwurzelpunkten befinden, die der Bestimmung der Orte der Bügelübergangspunkte zugrundegelegen hat.

Zum Zweck der Bereits erläuterten Kollisionsvermeidung wird vorzugsweise gemäß Anspruch 6 zusätzlich für jedes Auge der Ort von zumindest einem Brauenpunkt im Augenbrauenbereich dreidimensionell gemessen und wird die Brille mit einer Sollstellung jedes Brillenglases ausgebildet, bei der die dem Wangenpunkt, der Nasenflanke und zusätzlich dem Brauenpunkt nächsten Brillenglas- oder Fassungsflächen einen Mindestabstand zur Nasenflanke, dem Brauenpunkt und dem Wangenpunkt einhalten. Dabei versteht es sich, daß der Mindestabstand vom Wangenpunkt ein anderer sein kann, als der Mindestabstand vom Brauenpunkt und wiederum ein anderer sein kann als der Mindestabstand von der Nasenflanke.

In vorteilhafter Ausbildung der Erfindung kann ferner vorgesehen sein, daß die Nasenpunktmessung und die Kollisionspunktmessung, d.h. die Messung der Brauen- und Wangenpunkte, gleichzeitig und berührungslos erfolgen, was mit Hilfe der bereits erwähnten stereoskopischen Meßverfahren grundsätzlich möglich ist. Damit ist die vom Brillenträger geforderte Beteiligung zum Zweck der mechanischen Anpassung seiner Brille reduziert auf seine Mitwirkung bei einer wenig Zeit in Anspruch nehmenden stereoskopischen Aufnahme seines Gesichtes einschließlich des Schläfen- und Ohrenbereichs. Es ist erkennbar, daß dies für den Brillenträger sehr bequem ist und wenig Zeit von ihm verlangt.

Weitere vorteilhafte Ausgestaltungen der Erfindung sind in den Unteransprüchen gekennzeichnet.

Ausführungsbeispiele der Erfindung werden im Folgenden anhand der Zeichnungen näher erläutert. Es zeigen:
- Fig. 1: eine schematische perspektivische Darstellung des Augen-, Nasen- und Ohrenbereichs eines Brillenträgers in einem räumlichen Koordinatensystem zusammen mit zwei Brillengläsern;
- Fig. 2: eine Seitenansicht einer Brille;
- Fig. 3: eine Draufsicht auf eine Brille;
- Fig. 4: eine stereometrische Darstellung des Gesichts eines Brillenträgers;
- Fig. 5: eine ausschnittsweise Seitenansicht eines Ohres eines Brillenträgers;
- Fig. 6: eine Darstellung des Ohres gemäß Fig. 5 von hinten;
- Fig. 7: eine ausschnittsweise Seitenansicht des Gesichts eines Brillenträgers im Nasenbereich zusammen mit einem vor dem Auge angeordneten Brillenglas;
- Fig. 8: eine perspektivische Ansicht einer nach einem erfindungsgemäßen Verfahren hergestellten Brille im noch nicht zusammengefügten Zustand; und
- Fig. 9: eine perspektivische Darstellung der Brille gemäß Fig. 8 im zusammengefügten Zustand.

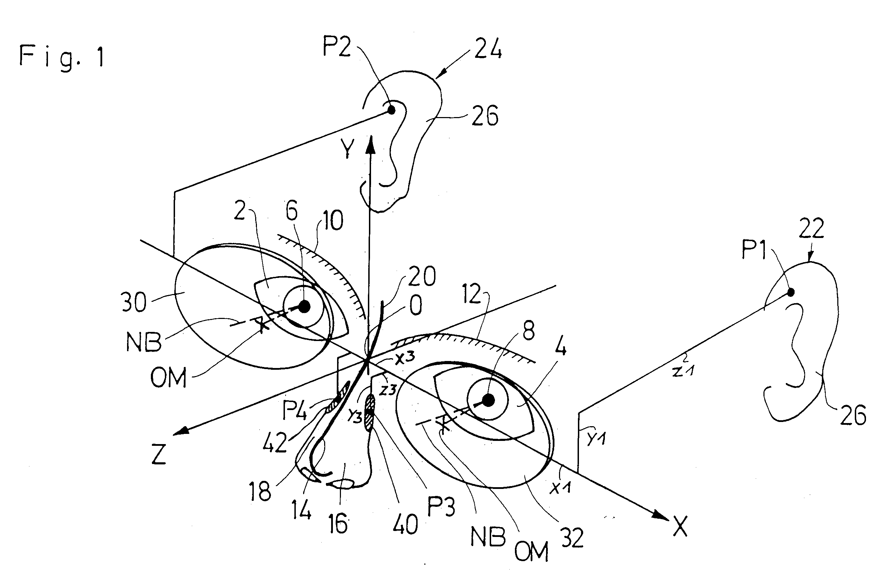

In Fig. 1 sind erkennbar ein rechtes Auge 2 und ein linkes Auge 4. Die beiden Augen 2 und 4 haben jeweils eine Augenmitte 6 bzw. 8. Oberhalb des rechten Auges befindet sich ein rechter Augenbrauenbereich 10, und oberhalb des linken Auges befindet sich ein linker Augenbrauenbereich 12, wobei beide Augenbrauenbereiche in Fig. 1 lediglich durch einen Strich angedeutet sind. Zwischen den beiden Augen 2 und 4 liegen die Nase, von der in Fig. 1 schematisch ein Nasenrücken 14, eine linke Nasenflanke 16 und eine rechte Nasenflanke 18 dargestellt sind. An seinem oberen Ende geht der Nasenrücken 14 über in eine Nasenrückenwurzel 20. Es versteht sich, daß sowohl der Nasenrükken 14 als auch die Nasenrückenwurzel 20 dreidimensionale Gebilde sind, obwohl sie in Fig. 1 lediglich durch eine Kurve angedeutet sind.

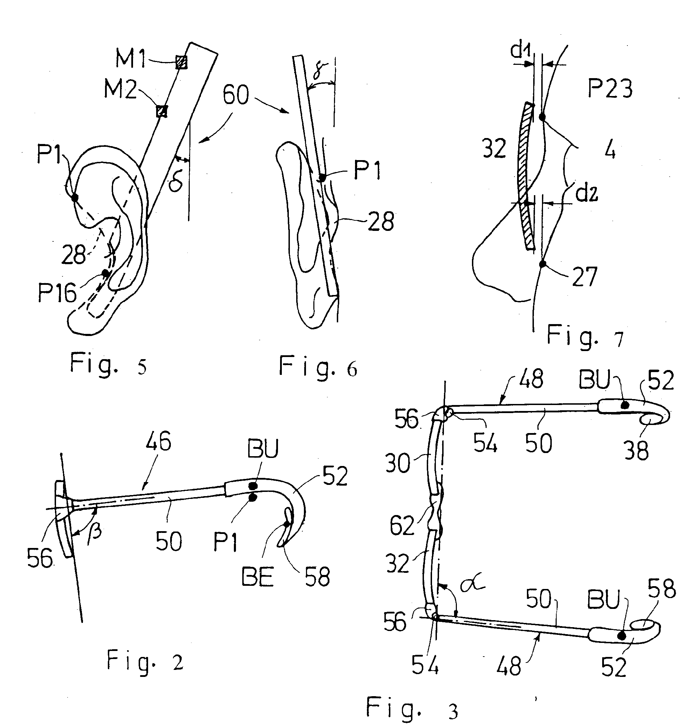

Seitlich am nicht gezeigten Schädel des Brillenträgers befinden sich ein linkes Ohr 22 und ein rechtes Ohr 24. Jedes der beiden Ohren hat eine Ohrmuschel 26, die zusammen mit dem nicht dargestellten Schädel eine Kulle bzw. Rille 28 bildet, an der die Ohrmuschel 26 in den Schädel übergeht (siehe Fig. 5 und 6). Am oberen Ende dieser Rille befindet sich jeweils ein oberer Ohrwurzelpunkt P1 bzw. P2, der bei Betrachtung des Gesichtes von vorne den tiefsten Punkt am Übergang zwischen der Ohrmuschel 26 und dem Schädel darstellt.

Beim erfindungsgemäßen Vorgehen werden die Orte einiger Punkte im Raum gemessen.Zu diesem Zweck wird dem Gesicht des Brillenträgers ein dreidimensionales Koordinatensystem zugeordnet. Im in Fig. 1 dargestellten Fall ist ein kartesisches Koordinatensystem gewählt mit den Systemkoordinaten X, Y und Z, für das die x-Achse, y-Achse und z-Achse in Fig. 1 eingezeichnet sind. Für das hier erläuterte Beispiel ist der Ursprung O des Koordinatensystems auf die Oberfläche der Nasenrückenwurzel 20 gelegt, und zwar in die Mitte zwischen die beiden Augenmitten 6 und 8. Die x-Achse verläuft waagerecht mit im wesentlichen gleichen Abständen von den beiden Augenmitten 6 und 8 vor diesen. Die z-Achse verläuft senkrecht zur x-Achse und waagerecht, und die y-Achse verläuft dementsprechend vertikal und senkrecht zu der durch die x-Achse und die z-Achse definierten Ebene. Die x-Achse und die y-Achse definieren die x,y-Ebene, die im wesentlichen parallel zum Gesicht verläuft und im folgenden als Bezugsebene betrachtet wird.

Im vorstehend erläuterten räumlichen Koordinatensystem kann der Ort eines jeden Punktes durch dessen drei Koordinaten x, y und z definiert und beschrieben werden. Für zwei oder mehr Punkte, deren Orte im räumlichen Koordinatensystem und somit im Raum bekannt sind, sind damit auch deren Relativstellungen zueinander im Raum vollständig definiert. Es versteht sich, daß das beschriebene kartesische Koordinatensystem lediglich ein Beispiel für ein räumliches Koordinatensystem ist und daß auch andere Koordinatensysteme zur Beschreibung der Orte von Punkten im Baum geeignet sind und daß Transformationen von einem Koordinatensystem zu einem anderen möglich sind.

Von einer Brille, die für den ausschnittsweise in den Fig.1 dargestellten Brillenträger angefertigt werden soll, sind in Fig. 1 lediglich die beiden Brillengläser gezeigt, nämlich ein rechtes Brillenglas 30 und ein linkes Brillenglas 32. Gemäß einem Beispiel des erfindungsgemäßen Verfahrens zur Herstellung einer Brille werden vom Brillenträger, gegebenenfalls im Zusammenwirken mit einem Anpasser, Form und Größe der Brillengläser sowie die Brückenweite gewählt, bei der es sich um den kleinsten Abstand zwischen den Rändern der beiden Brillengläser 30 und 32 handelt. Für die beiden Brillengläser 30 und 32 liegen Rezeptwerte, d.h. vorgeschriebene dioptrische Wirkungen, vor, da eine Brille mit Korrektionswirkung hergestellt werden soll. Für die beiden Brillengläser wird jeweils eine Sollstellung vorgegeben, und zwar relativ zu zwei den Augen 2 und 4 zugeordneten Bezugspunkten, bei denen es sich um die Augenmitten 6 und 8 handelt. In der vorgegebenen Sollstellung haben die Brillengläser beispielsweise einen Scheitelabstand von 12 mm, eine Vorneigung von 6°, eine Seitenneigung (Neigung der Brillengläser derart, daß ihre nasenferneren Ränder sich weiter hinten befinden als ihre nasennäheren Ränder, d.h. im dargestellten Koordinatensystem kleinere z-Werte haben) von 3° und eine vertikale Dezentration von 2 mm, aufgrund derer die optischen Mitten 0M der Brillengläser vertikal 2 mm unterhalb der Nullblickrichtung NB liegen (siehe Fig. 1). Durch die Vorgabe der Sollstellung in vorstehend angegebener Weise sind die üblichen optischen und ästhetischen Forderungen in Bezug auf die Anordnung der Brillengläser vor den Augen erfüllt; ferner wird bei der Vorgabe der Sollstellung berücksichtigt, daß das Brillenglas mit Sicherheit vor dem Gesicht des Brillenträgers angeordnet ist und an keiner Stelle in dessen Oberfläche eindringen würde. Es versteht sich, daß die vorstehend genannte Auswahl von Brillenglaseigenschaften und Vorgabe der Sollstellung bereits unter Berücksichtigung von Messenungen am Brillenträger und auch iterativ erfolgen kann. Durch die vorgegebene Sollstellung ist schließlich vorgegeben, ob und wie eine Korrektur der Rezeptwerte der Brillengläser zu erfolgen hat, damit diese optisch angepaßt sind. Bei der später erfolgenden körperlichen Ausbildung der Brillengläser werden diese mit der Korrektur gefertigt.

Im Anschluß an die vorstehend erläuterte Auswahl und Vorgabe liegt fest, wo sich die Brillengläser 30 und 32 im Raum relativ zu den Bezugspunkten in Form der beiden Augenmitten 6 und 8 befinden. Dies gilt nicht nur für ausgewählte Punkte der beiden Brillengläser wie beispielsweise die optischen Mitten 0M, sondern für alle Punkte der beiden Brillengläser. Im gleichen Koordiantensystem, in dem die Orte der beiden Augenmitten 6 und 8 bekannt sind, sind dann auch die Orte aller Punkte der beiden Brillengläser 30 und 32 bekannt.

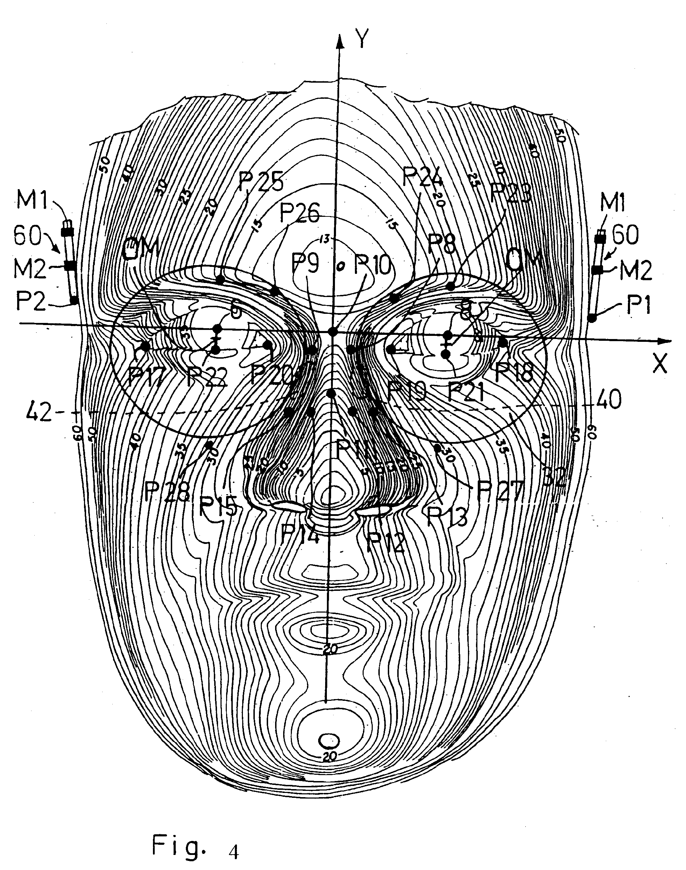

Die in Fig. 1 nicht dargestellte Fassung der herzustellenden Brille soll die beiden Brilengläser in der Sollstellung vor den Augen halten. Zu diesem Zweck stützt sich die Fassung mit zwei Seitenstegen 34 und 36 (siche Fig. 8, in Fig. 1 nicht dargestellt) an den beiden Nasenflanken 16 und 18 ab, wobei die beiden Seitenstege 34 und 36 mit ihren Steg-Auflageflächen 38 in Kontakt mit einer Kontaktfläche 40 bzw. 42 stehen, die jeweils von einem Bereich der Oberfläche der Nasenflanke 16 bzw. 18 gebildet ist. Die beiden Kontaktflächen 40 und 42 sind in Fig. 1 schematisch durch Schraffur angedeutet. Ungefähr in der Mitte jeder der beiden für die Brille vorgesehenen Kontaktflächen befindet sich ein Nasenpunkt P3 bzw. P4.

Für jede Steg-Auflagefläche werden zumindest drei Nasenpunkte gemessen. Beispiele für die Lage der Nasenpunkte sind in Fig. 4 gezeigt. Zur Bestimmung des Ortes und beider Richtungen im Raum der auf der Kontaktfläche 40 aufliegenden Steg-Auflagefläche eines Seitensteges dienen drei Nasenpunkte P8, P12 und P13, die an den Ecken eines Dreiecks auf der Nasenflanke 16 liegen, das eine Fläche definiert. Am dargestellten Beispiel ist zu erkennen, daß die Nasenpunkte außerhalb der zugeordneten Kontaktfläche 16 liegen können. Sie können jedoch auch in der Kontaktfläche 16 liegen. Dementsprechendes gilt für die Nasenpunkte P9, P14 und P15 sowie die Kontaktfläche 42 auf die anderen Nasenflanke 18. Die Nasenpunkte P8 und P9 dienen zusammen mit Nasenpunkten P10 und P11, die beide auf dem Nasenrücken oberhalb bzw. unterhalb der Nasenpunkte P8 und P9 liegen, als Nasenpunkte, deren Orte im Raum gemessen werden können, um daraus für einen Sattelsteg Ort und Richtungen von dessen Steg-Auflagefläche zu bestimmen.

Die vorstehenden Beispiele zeigen, daß es für die Nasenpunkte, deren Orte im Raum zur Festlegung der Steg-Auflageflächen an der Brille gemessen werden, mehrere Möglichkeiten gibt, die im übrigen vorstehend nicht sämtlich aufgezählt sind.

Die Nasenpunktmessung erfolgt, während die Nase entspannt und unverformt ist und ohne daß sie beispielsweise durch Stege einer Brille belastet ist. Da die Orte der beiden als Bezugspunkte dienenden Augenmitten 6 und 8 im Raum ebenfalls bekannt sind, liefert die Nasenpunktmessung die genaue Relativlage der Nasenpunkte bezüglich der Augenmitten 6 und 8 und auch die genaue Relativlage der Nasenpunkte relativ zu den beiden Brillengläsern 30 und 32 im Raum, da deren Relativlage bezüglich der Bezugspunkte in Form der Augenmitten 6 und 8 im Raum bereits festliegt. Ergebnis der Nasenpunktmessung ist somit die genaue räumliche Zuordnung der Orte der Nasenpunkte zu den Brillengläsern 30 und 32. Dadurch ist bestimmt, wo im Raum relativ zu den beiden Brillengläsern 30 und 32 die beiden Stege 34 und 36 liegen sollen; dementsprechend wird die Brille ausgebildet. Bei der dementsprechend ausgebildeten Brille befinden sich die Steg-Auflageflächen im Raum genau dort, wo sich die Kontaktflächen 40 und 42 befinden, sofern die Brillengläser 30 und 32 ihre Sollstellung einnehmen. Dadurch ist zugleich für einwandfreien mechanischen Sitz der Brille im Nasenbereich und für optisch einwandfreie Anpassung gesorgt. Wenn die Steg-Auflageflächen auf den zugeordneten Kontaktflächen 40 und 42 ohne Deformation der letzteren aufsitzen, ist zugleich für Anordnung der Brillengläser 30 und 32 in ihrer Sollstellung gesorgt.

Vorstehend ist beschrieben, wie das Mittelteil einer Brille mit seinen optisch und mechanisch relevanten Elementen, d.h. seinen Brillengläsern 30 und 32 sowie seinen Stegen 34 und 36 so ausgebildet wird, daß es mechanisch einwandfrei sitzt, d.h. mechanisch korrekt angepaßt ist und - im Falle einer Brille mit Korrektionswirkung - auch optisch angepaßt ist. Die Abstützung des Mittelteils an der Nase des Brillenträgers reicht jedoch allein nicht aus, um die Brille im Hinblick auf die üblichen Belastungsfälle während der Benutzung hinreichend festzuhalten. Um ausreichende Festhaltung bzw. Sicherung der Brille im Gesicht und am Kopf des Brillenträgers zu gewährleisten, ist die Brille mit in Fig. 1 nicht dargestellten Bügeln versehen, die die Brille im Bereich der Ohren 22 und 24 abstützen und verankern.

Die mechanische Anpassung der Bügel an den individuellen Brillenträger, d.h. die Formung und Ausrichtung der Bügel einschließlich ihrer in Fig. 1 nicht dargestellten Bügelendstücke derart, daß sie mit den ihnen zugeordneten Kontaktflächen in Berührung stehen, ohne unnötig hohe Drücke auszuüben, beim erfindungsgemäßen Vorgehen objektiviert, wie dies im folgenden beschrieben wird.

Bei dem hier erläuterten Ausführungsbeispiel des erfingungsgemäßen Verfahrens werden die Orte der Ohrwurzelpunkte P1 und P2 im Raum relativ zu den als Bezugspunkte dienenden Augenmitten 6 und 8 und somit auch relativ zu den ihre Sollstellung einnehmenden Brillengläsern 30 und 32 und den Nasenpunkten gemessen. Diese Messung liefert beispielsweise für den Ohrwurzelpunkt P1 dessen Koordinaten x1, y1 und z1 (siehe Fig. 1). Auch die Orte der übrigen in Betracht gezogenen Punkte sind durch deren Koordinaten x, y und z definiert; der Klarheit halber sind sie jedoch nicht für alle Punkte in Fig. 1 eingezeichnet und lediglich als weiteres Beispiel für den Nasenpunkt P3 mit x3, y3 und z3 benannt.

Den auf diese Weise im Raum erfaßten Ohrwurzelpunkten P1 und P2 wird zugeordnet, wo im Raum relativ zu den Ohrwurzelpunkten P1 und P2 die beiden in Fig. 1 nicht dargestellten Bügel verlaufen sollen. Beispielsweise wird vorgegeben, daß ein sogenannter Bügelübergangspunkt BU 3 mm senkrecht oberhalb des jeweiligen Ohrwurzelpunktes P1 bzw. P2 liegen soll. Als Bügelübergangspunkt wird dabei derjenige Punkt BU am linken Bügel 46 bzw. am rechten Bügel 48 (siehe Fig. 2 und 3) bezeichnet, an dem der vor dem Ohr befindliche, im wesentlichen gerade Bügelschaft bzw. Bügelabschnitt 50 in das Bügelendstück 52 übergeht, das bei aufgesetzter Brille oberhalb des zugeordneten Ohres und hinter demselben angeordnet ist. Auf diese Weise ist aus der Messung der Oberen Ohrwurzelpunkte P1 und P2 für den jeweiligen Bügel der Ort eines seiner Punkte im Raum, nämlich des Bügelübergangspunktes, festgelegt. Die Brille wird dann derart ausgebildet, daß an der gebrauchsfertigen Brille die Bügelübergangspunkte den vorbestimmten Ort relativ zu den übrigen Fassungsteilen und zu den Brillengläsern einnehmen. Dabei kann berücksichtigt werden, daß die Bügel im aufgesetzten Zustand etwas nach außen gebogen sind, damit sie im Bereich der Bügelübergangspunkte unter gewünschtem Druck seitlich am Schädel anliegen. Der Öffnungswinkel α, der Inklinationswinkel β und die Bügellänge zwischen dem Gelenk 54 und dem jeweiligen Bügelübergangspunkt (siehe Fig. 2 und 3), die sich durch die Ausbildung der Brille mit den beiden Bügelübergangspunkten BU ergeben, hängen nicht allein vom Ort des jeweiligen Bügelübergangspunktes BU, sondern auch vom Ort des Gelenks 54 bzw. der entsprechenden Backe 56 im Raum ab, der wiederum durch die Sollstellung des zugeordneten Brillenglases und die Zuordnung der Backe zum Brillenglas vorgegeben bzw. bestimmt ist.

Die relative Zuordnung, die zwischen den gemessenen Ohrwurzelpunkten P1 und P2 einerseits und den zugeordneten Bügelübergangspunkten BU andererseits vorgenommen wird, kann auch auf andere Weise festgelegt werden, als dies vorstehend geschehen ist. Beispielsweise kann der jeweilige Bügelübergangspunkt relativ zum zugeordneten oberen Ohrwurzelpunkt nach vorne oder hinten, d.h. in Richtung der z-Achse, verlagert sein oder auch zusätzlich nasch außen, d.h. in Richtung der x-Achse, verlagert sein.

Bei dem erfindungsgemäßen Verfahrens ist vorgesehen, daß auch die Bügelendstücke 52 nicht mehr auf herkömmliche Weise subjektiv mechanisch angepaßt werden, sondern objektiv mechanisch angepaßt werden, d.h. auf Grundlage einer Messung ausgebildet werden.

Jedes der Bügelendstücke 52 steht mit seiner Anlagefläche in Kontakt mit einer zweiten Kontaktfläche, die durch einen Oberflächenbereich am Ohr 22 bzw. 24 und/oder am nicht dargestellten Schädel im Bereich des Ohrs gebildet ist. Diese Kontaktfläche wird als zweite Kontaktfläche im Gegensatz zu jeder der Kontaktflächen auf der Nase bezeichnet, die in diesem Zusammenhang die erste Kontaktfläche ist. Damit bei der Brillenausbildung dem zugeordneten Bügelendstück eine die zweite Kontaktfläche berücksichtigende Form und Anordnung gegeben werden kann, wird der Ort zumindest eines Ohrpunktes P16 (siehe Fig. 5) in oder nahe der zweiten Kontaktfläche im Raum und somit relativ zu den als Bezugspunkte dienenden Augenmitten 6 und 8 mit Hilfe eines Tasters 60 gemessen, wie dies weiter unten erläutert wird. Aus dem Ort des Ohrpunktes wird der Ort eines in der Anlagefläche 58 des Bügelendstücks 52 liegenden, dem Ohrpunkt P16 zugeordneten Punktes BE bestimmt. Das Bügelendstück 52 wird mit diesem bestimmten Ort des Punktes BE im Raum und somit relativ zu den übrigen Elementen der Fassung sowie den Brillengläsern 30 und 32 ausgebildet. Die Zuordnung zwischen dem gemessenen Ohrpunkt P16 und dem Punkt BE in der Anlagefläche 58 des Bügelendstücks 52 kann beispielsweise in der Form erfolgen, daß sich die zweite Kontaktfläche und die Anlagefläche bei den beiden Punkten drucklos und ohne Verformung der zweiten Kontaktfläche berühren, wenn die Brille aufgesetzt ist. Eine weitere Möglichkeit besteht darin, vorzugeben, daß sich die zweite Kontaktfläche und die Anlagefläche bei den beiden Punkten unter einem gewissen Druck berühren und daß die hierzu erforderliche Kraft durch elastische Auslenkung eines federnd nachgiebigen Bügelendstücks erzeugt wird.

Insbesondere dann, wenn das Bügelendstück eine gewisse federnde Nachgiebigkeit hat und sich in seiner räumlichen Ausrichtung der zweiten Kontaktfläche anpassen kann, reicht die Messung des Ortes eines Ohrpunktes in oder nahe der zweiten Kontaktfläche aus. Zur genaueren Erfassung der zweiten Kontaktfläche können in oder nahe dieser jedoch auch mehrere Ohrpunkte gemessen und der Bestimmung der Anlagefläche 58 zugrundegelegt werden.

Obwohl vorzugsweise sowohl die Orte der Bügelübergangspunkte BU als auch die Punkte BE in den Anlageflächen 58 vorgegeben werden, ist es auch möglich, allein einen oder mehrere Punkte BE zur Festlegung der Anlageflächen 58 zu bestimmen und die Bügelübergangspunkte nicht zu bestimmen, sofern ein Kontakt des Bügels mit dem Schädel und/oder dem Ohr in Bereich der Bügelübergangspunkte nicht erfolgen soll und durch Verlagerung des Bügelübergangspunktes weit genug nach oben und außen dafür gesorgt ist, daß dort keine Kollisionen mit dem Ohr oder dem Schädel erfolgen.

Bei dem erfindungsgemäßen Verfahren erfolgen alle Nassenpunktmessungen und Bezugspunktmessungen auf optischem Weg bei Betrachtung des Gesichtes von vorne. Dabei werden vorzugsweise alle gewünschten Messungen gleichzeitig vorgenommen. Da dabei die zweiten Kontaktflächen nicht direkt sichtbar, sondern abgeschattet sind, erfolgt die Messung der Ohrpunkte auf folgende Weise.

Ein stabförmiger Taster 60 ist an seinem unteren Ende ungefähr so profiliert, wie die Anlagefläche 58 des für die zu fertigende Brille vorgesehenen Bügelendstücks (siehe Fig. 5). Ein solcher Taster 60 wird mit seinem profilierten Endstück an die zweite Kontaktfläche so angelegt, daß der Taster praktisch drucklos mit der zweiten Kontaktfläche in Berührung steht und daß das obere Ende des Tasters aus dem vom Ohr und Schädel bei Betrachtung des Gesichts von vorne abgeschatteten Bereich vortritt und sichtbar ist (siehe auch Fig. 4). In diesen Stellungen werden die beiden Taster 60 während der Nasenpunktmessung gehalten. Jeder der beiden Taster 60 ist mit zwei Marken M1 und M2 bzw. M3 und M4 versehen, deren Orte im Raum relativ zu den zwei Bezugspunkten gemessen werden, so daß aufgrund der bekannten Anordnung der beiden Marken am jeweiligen Taster und aufgrund der bekannten Tastergeometrie die genaue Lage jedes Tasters im Raum bekannt ist. Da der Taster beispielsweise an den Ohrpunkt P16 angelegt ist, ist durch die Messung der Stellung des Tasters auch der Ort des Ohrpunktes P16 im Raum gemessen. Aufgrund dieser Ohrpunktmessung erfolgt für jedes Ohr die Bestimmung des Punktes BE in der Jeweiligen Anlagefläche 58 auf oben erläuterte Weise.

Wenn der Taster, insbesondere aufgrund seiner Profilierung, an mehreren Punkten der zweiten Kontaktfläche anliegt, so werden mit Hilfe der Messung der Stellung des Tasters die Orte von mehreren Ohrpunkten in oder nahe jeder zweiten Kontaktfläche gemessen, was die Bestimmung mehrerer Punkte BE für die Anlagefläche 58 und somit eine genauere Festlegung derselben im Raum ermöglicht. Bei geneigt im Raum angeordneten Anlageflächen 58 können der Seitenneigungswinkel γ des Tasters 60 relativ zur Senkrechten (siehe Fig.6) und der Rückneigungswinkel δ des Tasters relativ zur Senkrechten (siehe Fig.5) zur Festlegung der Richtungen der Anlagefläche 58 im Raum benutzt werden bzw. diese Richtungen unmittelbar vorgeben.

Obwohl vorstehend ein Taster 60 beschrieben ist, der an seinem unteren Ende entsprechend der Anlagefläche 58 profiliert ist, ist eine solche Profilierung nicht unbedingt notwendig. Vielmehr kann auch ein Taster benutzt werden, der in dem Bereich, mit dem er in oder nahe der zweiten Kontaktfläche anliegt, einen geraden Verlauf hat und lediglich einen Punkt in oder nahe der Kontaktfläche berührt.

Fig. 4 zeigt anhand einer Vorderansicht eines Gesichtes ein Beispiel dafür, von welchen Punkten die Orte gemessen werden. Die Darstellung des Gesichtes in Fig. 4 ist Ergebnis einer stereoskopischen Aufnahme, wobei die Tiefe senkrecht zur Zeichenebene von Fig. 4 durch Schichtlinien erkennbar gemacht ist, die senkrecht zur Zeichenebene von Fig. 4 den Abstand von der mit "0" bezeichneten Nasenspitze in mm wiedergeben. Die stereoskopische Aufnahme liefert die Orte von einer unendlichen Vielzahl von Punkten, von denen jedoch im Rahmen des Verfahrens zur Herstellung der Brille nur einige ausgewertet werden. Die in Fig. 4 eingezeichneten und ausgewerteten Punkte sind auf gleiche Weise bezeichnet wie in den übrigen Figuren. Zur Angabe der Orte dienen beim gezeigten Beispiel kartesische Koordinaten. Dabei verläuft die x-Achse durch die Bilder der beiden Augenmitten 6 und 8 in Fig. 4 derart, daß die x-Achse genau in der Mitte zwischen den beiden Augenmitten 6 und 8 die Nasenrückenwurzel 20 (siehe Fig. 1) berührt. An diesem Punkt der x-Achse in der Mitte zwischen den beiden Augenmitten 6 und 8 liegt der Ursprung O des Koordinatensystems. Senkrecht zur x-Achse und parallel zur Zeichenebene von Fig. 4 verläuft die y-Achse, und senkrecht zu der x,y-Ebene verläuft die in Fig. 4 nicht dargestellte z-Achse. Die x,y-Ebene bildet dabei die Bezugsebene. Als Bezugspunkte dienen die beiden Augenmitten 6 und 8, deren halber Abstand voneinander zweckmäßigerweise als Längeneinheit zur Definition weiterer zu messender Punkte dient. Durch ihre Lage im Gesicht bzw. den Augen vorgegeben sind die inneren Augenwinkelpunkte P19 und P20, die äußeren Augelwinkelpunkte P17 und P18 sowie Lidpunkte P21 und P22, die sich auf der Oberkante des Unterlides senkrecht, d.h. in Richtung der y-Achse, unterhalb der zugeordneten Augenmitte befinden und als Bemessungspunkt zur Festlegung des Ortes einer Bifokal-Trennlinie im jeweiligen Brillenglas dienen, sofern ein Bifokal-glas vorgesehen ist. Für die Lidpunkte P21 und P22 sowie die Augenwinkelpunkte P17 bis P20 können die Messungen der Orte in der Bezugsebene, d.h. die Messung der x-Koordinate und der y-Koordinate ausreichen, wenn beispielsweise die Lidpunkte in der vorstehend angegebenen Weise benutzt werden und die Augenwinkelpunkte beispielsweise lediglich zur Bestimmung der Scheibengröße oder dazu benutzt werden, eine andere Längeneinheit statt des halben Augenmittenabstandes zu definieren.

Die oberen Ohrwurzelpunkte P1 und P2 sind in ihrer Lage ausschließlich durch den Brillenträger vorgegeben; Entsprechendes gilt für die Marken M1 bis M4. Sowohl die Orte dieser Marken als auch die Orte der oberen Ohrwurzelpunkte P1 und P2 werden mit allen drei Koordinaten gemessen.

Die Orte der gemessenen Nasenpunkte sind nicht allein durch den Brillenträger vorgegeben, sondern werden vorzugsweise hinsichtlich eines Teils ihrer Koordinaten gewählt. Beispielsweise wird der auf dem Nasenrücken liegende Nasenpunkt P10 in den Ursprung O gelegt. Der weitere Nasenpunkt P11 liegt auf dem Nasenrücken und in der Bezugsebene auf der y-Achse sowie eine halbe Längeneinheit unterhalb des Ursprungs. Die Messung des Ortes des Nasenpunktes P11 ist somit auf die Messung der z-Koordinate reduziert. Die x- und y-Koordinate der Nasenpunkte P12 und P13 sowie des Nasenpunktes P8 werden auf ähnliche Weise als Bruchteile der Längeneinheit vorgegeben. Die drei letztgenannten Nasenpunkte definieren eine Fläche, in der die vorgesehene Kontaktfläche 40 liegt. Die Nasenpunkte P9, P14 und P15 liegen in der Bezugsebene symmetrisch zu den Nasenpunkten P8, P12 und P13 und dienen als Nasenpunkte, deren Orte zum Zweck der Erfassung der Kontaktfläche 42 im Raum gemessen werden.

Außer den vorstehend bereits erwähnten Punkten und Marken werden auch sogenannte Kollisionspunkte hinsichtlich ihres Ortes im Raum gemessen, deren Messung dazu dienen soll, zu verhindern, daß die vorgesehenen Brillengläser und gegebenenfalls deren Fassungsränder dem Gesicht des Brillenträgers zu nahe kommen. Zu diesen Kollisionspunkten gehören für jedes Auge zwei Brauenpunkte P23 und P24 bzw. P25 und P26 sowie ein Wangenpunkt P27 bzw. P28. Die beiden Brauenpunkte P23 und P25 liegen jeweils am Übergang von der Augenhöhle zur Stirn und in der Bezugsebene senkrecht über der zugeordneten Augenmitte, so daß ihre x-Koordinate vorgegeben ist, ihre y- und z-Koordinaten jedoch gemessen werden müssen. Für den jeweils weiter innen liegenden Brauenpunkt P24 bzw. P26 wird wiederum die x-Koordinate als Bruchteil der Längeneinheit vorgegeben, während die beiden anderen Koordinaten gemessen werden müssen. Für jeden der beiden Wangenpunkte 27 bzw. 28 werden die x- und die y-Koordinate vorgegeben, beispielsweise mit dem Betrag des halben Augenmittenabstandes, und werden die z-Koordinaten gemessen. Die Wangen- und Brauenpunkte dienen dazu, rechnerisch oder zeichnerisch zu überprüfen, ob das vorgesehene Brillenglas in seiner Sollstellung Abstände d1 bzw. d2 von den Kollisionspunkten hat, die nicht kleiner als ein vorgegebener Mindestabstand sind (siehe Fig.7).

Auf entsprechende Weise erfüllen auch die Nasenpunkte P8, P12 und P13 zugleich die Funktion von Kollisionspunkten, da sie am inneren Rand des jeweiligen Brillenglases den Verlauf der Nasenflanke wiedergeben, so daß rechnerisch oder zeichnerisch überprüft werden kann, ob der innere Rand des Brillenglases bzw. sein Fassungsrand einen vorgegebenen Mindestabstand zu diesen Flankenpunkten einhält. In Fig. 4 sind auch die beiden Brillengläser 30 und 32 schematisch eingezeichnet. Es ist erkennbar, daß beispielsweise bei der Wahl der Größe der Brillengläser und der Brückenweite die gemessenen Punkte herangezogen werden können, indem beispielsweise aufgrund ästhetischer Überlegungen vorgegeben wird, daß die Brückenweite gleich dem Betrag der x-Koordinaten des inneren Augenwinkelpunktes P19 sein soll.

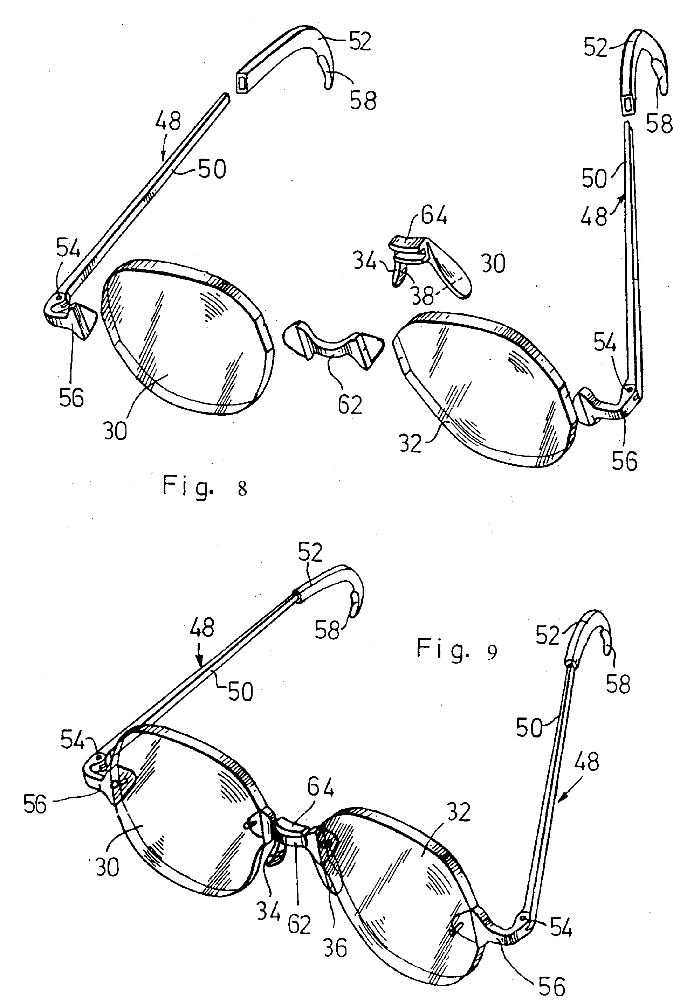

Die Fig. 8 und 9 zeigen ein Beispiel einer nach einem erfindungsgemäßen Verfahren hergestellten Brille, wobei Fig. 8 die Elemente der Brille im noch nicht montierten Zustand zeigt und Fig. 9 die Brille im fertig montierten Zustand zeigt. Für die Elemente der Brille sind gleiche Bezugszeichen wie in der bisherigen Beschreibung verwendet; die diesbezüglich bereits gegebenen Erläuterungen werden im folgenden nicht wiederholt. Da die Elemente des im folgenden beschriebenen Brillenbeispiels zunächst als getrennte Bauteile vorliegen, die nach geeigneter Auswahl und Dimensionierung zusammengefügt werden, können sie zweckmäßigerweise auch als Module bezeichnet werden, die dann zusammen eine Modulbrille ergeben.

Die beiden Brillengläser 30 und 32, deren Form durch das gewählte Brillenmodell bestimmt ist, deren Größe unter Berücksichtigung der Abstände der inneren Augenwinkelpunkte und der Abstände der äußeren Augenwinkelpunkte gewählt worden ist und deren dioptrischen Wirkung aufgrund der Rezeptwerte unter Berücksichtigung einer gegebenenfalls aufgrund der gewählten Sollstellung zweckmäßigen Korrektur festgelegt worden ist, sind mit Hilfe einer Brücke 62 verbunden, die an ihren beiden Enden mit den beiden Brillengläsern 30 und 32 verschraubt ist, da es sich beim gewählten Brillenbeispiel um eine sogenannte Glas- bzw. Beschlagbrille handelt. Stil und Lage der Verbindungsstellen zwischen der Brücke und den beiden Brillengläsern sind zusammen mit dem Brillenmodell gewählt. Die Brückenweite ist aus dem Abstand der gemessenen inneren Augenwinkelpunkte bestimmt, wie dies vorstehend in Verbindung mit Fig. 4 erläutert ist.

Während des Zusammenfügens der Brille wird mit der Brücke 62 ein Stegbauteil 64 fest verbunden, das einstückig mit den beiden Seitenstegen 34 und 36 ausgebildet ist. Die beiden Seitenstege 34 und 36 sind durch mechanische oder durch plastische Verformung unter Wärmezufuhr derart ausgebildet, daß ihre Steg-Auflageflächen 38 an der fertig montierten Brille die erforderlichen Orte und Ausrichtugnen haben. Wie dies aufgrund der Nasenpunktmessung geschieht, ist weiter oben ausführung erläutert.

Die Größe der Steg-Auflageflächen 38, d.h. deren Flacheninhalt wird vorzugsweise aufgrund des Gewichtes der gesamten Brille festgelegt. Da entweder aufgrund der getroffenen Auswahl oder der durchgeführten Messungen für alle Elemente bzw. Module der Brille deren Formen, Größen und Werkstoffe festliegen, können für alle Module bzw. Elemente die Gewichte und somit das Gesamtgewicht der Brille errechnet werden, und zwar einschließlich des Gewichtes der Brillengläser. Aufgrund der ebenfalls aus den Messungen bekannten räumlichen Zuordnung der Steg-Auflageflächen und der Anlageflächen der Bügelendstücke kann errechnet werden, welcher Gewichtsanteil von jedem Steg und jedem Bügelendstück aufzunehmen ist. Die Kenntnis dieser Gewichtsanteile und die Richtungen der Steg-Auflageflächen bzw. der Anlageflächen im Raum ermöglichen es wiederum, für einen vorgegebenen Flächeninhalt der genannten Flächen die dort aufgrund des Brillengewichts herrschenden Drücke zu berechnen und mit zulässigen Drücken zu vergleichen oder die Flächeninhalte derart zu dimensionieren, daß dort lediglich bestimmte zulässige Drücke herrschen.

Stil und Anbringungsort der Backen 56 an den Brillengläsern 30 und 32 sind durch die Brillenmodellwahl gewählt. Die beiden Backen 56 sind jedoch unter Wärmezufuhr plastisch derart geformt, daß die Öffnungswinkel α und die Inklinationswinkel β diejenigen Werte haben, die notwendig sind, damit die Bügelübergangspunkte BU am vorbestimmten Ort relativ zu den übrigen Brillenelementen liegen (siehe Fig. 2 und 3). Unter gleichem Gesichtspunkt erfolgt die Längenausbildung der beiden Bügel bis zu den Bügelübergangspunkten. Dabei ist beim dargestellten Ausführungsbeispiel der Brille vorgesehen, daß die Schäfte 50 der Bügel 46 derart abgeschnitten sind, daß der jeweilige Bügelübergangspunkt genau am freien Ende des Schaftes 50 liegt. Auf dieses freie Ende ist jeweils das zugehörige Bügelendstück 52 bis zu einem im Bügelendstück 52 ausgebildeten Anschlag geschoben. Das Bügelendstück seinerseits ist zuvor unter Wärmezufuhr plastisch derart verformt worden, daß es im mit dem Schaft 50 verbundenen Zustand die aufgrund der Ohrwurzelpunktmessung und der Ohrpunktmessung bestimmte räumliche Zuordnung des Bügelübergangspunktes und der Punkte BE (siehe Fig. 2) gewährleistet. Die Größe der Anlagefläche 58, d.h. deren Flächeninhalt, ist unter Berücksichtigung des Brillengewichts auf vorstehend bereits erläuterte Weise festgelegt oder zumindest überprüft worden.

Es ist erkennbar, daß die fertige Brille dem Brillenträger individuell genau angepaßt ist, und zwar sowohl mechanisch als auch optisch, wobei die gesamte mechanische Anpassung nicht auf herkömmliche Weise subjektiv, sondern objektiv erfolgt ist. Die zur mechanischen Anpassung erforderlichen Informationen sind in einem einzigen Meßvorgang auf stereometrischem Wege gewonnen worden. Dieser einzige Meßvorgang kostet den Brillenträger kaum Zeit und verursacht ihm keine Unbequemlichkeiten, so daß ihm mit geringem Zeitaufwand auf bequeme Weise eine individuell angepaßte, sehr gut sitzende Brille verschafft werden kann.

## Patentansprüche

1. Verfahren zum Herstellen einer individuell angepaßten Brille, wobei dem Gesicht des Brillenträgers ein dreidimensionales Koordinatensystem zugeordnet wird, wobei zum Vermessen und Herstellen des Mittelteils und der Bügel der Brille das Gesicht des Brillenträgers bei Betrachtung im wesentlichen von vorn optisch vermessen wird, wobei zumindest von den folgenden Punkten die dreidimensionalen Koordinaten (x, y, z) ermittelt werden:
a) den beiden Augenmitten (6, 8);
b) je drei eine Fläche definierenden Nasenpunkten (P8, P9, P12, P13, P14, P15) in oder nahe einer ersten Kontaktfläche (40, 42) jeder Nasenflanke, die für den Kontakt mit der Auflagefläche (38) eines von zwei Stegen (34, 36) der Brille bestimmt ist,
c) je einem Wangenpunkt (P27, P28) im Wangenbereich unterhalb jedes Auges, von dem die nächstliegende Brillenglas- oder Fassungsfläche einen Mindestabstand einhalten soll;
d) je zwei Marken (M1 bis M4) zweier Taster (60), von denen jeder an einer zweiten Kontaktfläche, die hinter dem jeweiligen Ohr für den Kontakt mit einem Bügelendstück der Brille bestimmt ist, angelegt ist und aus dem vom Ohr und Schädel abgeschatteten Bereich vorsteht,
und wobei die Brille aufgrund der so ermittelten Maße aus Einzelteilen entsprechender Form und Größe hergestellt wird.

2. Verfahren nach Anspruch 1, dadurch gekennzeichnet, daß der gemessene Wangenpunkt (P27, P28) senkrecht unterhalb der Augenmitte (6, 8) des jeweiligen Auges liegt.

3. Verfahren nach Anspruch 1 oder 2, wobei für die beiden Brillengläser (30, 32) relativ zu den Augenmitten (6, 8) eine Sollstellung vorgegeben wird, in der die Brillengläser das Gesicht des Brillenträgers nicht berühren, dadurch gekennzeichnet, daß die Sollstellung der Brillengläser in der Weise vorgegeben wird, daß zunächst geprüft wird, ob die Brillengläser dann, wenn sie einen ihrer dioptrischen Wirkung zugeordneten, ersten Abstand von den Augenmitten haben, Mindestabstände von den durch die Nasenpunkte (P8, P9, P12 bis P15) definierten Flächen und den Wangenpunkten (P27, P28) einhalten, und danach entweder, wenn die Mindestabstände eingehalten sind, dieser erste Abstand als Abstand von den Augenmitten in der Sollstellung vorgegeben wird, oder, wenn zumindest ein Mindestabstand nicht eingehalten ist, die Überprüfung der Mindestabstände mit im Vergleich zum ersten Abstand vergrößertem, zweitem Abstand wiederholt wird, bis die Mindestabstände eingehalten sind, und dann derjenige zweite Abstand, bei dem die Mindestabstände eingehalten sind, als Abstand von den Augenmitten in der Sollstellung vorgegeben wird, und daß die Brille mit einer räumlichen Beziehung zwischen den Brillengläsern und dem zumindest einen Steg (34, 36) hergestellt wird, wie sie sich aus dieser Sollstellung und dem Ort und der Ausrichtung der Steg-Auflagefläche (38) ergibt.

4. Verfahren nach Anspruch 3 zur Herstellung einer Brille mit Korrektionswirkung, für die die dioptrischen Wirkungen der Brillengläser durch Rezeptwerte vorgeschrieben sind, dadurch gekennzeichnet, daß die Brillengläser (30, 32) mit dioptrischen Wirkungen hergestellt werden, die ausgehend von den Rezeptwerten entsprechend den vorgegebenen Sollstellungen, mit denen die Brille hergestellt wird, korrigiert sind.

5. Verfahren nach einem der Ansprüche 1 bis 4, dadurch gekennzeichnet, daß für die Nasenpunktmessung zwei der drei Koordinaten (X, Y, Z) des jeweiligen Nasenpunktes (P3 bis P9, P12 bis P15) vorgegeben und die zugehörige dritte Koordinate gesucht wird.

6. Verfahren nach einem der Ansprüche 3 oder 4, dadurch gekennzeichnet, daß für jedes Auge die dreidimensionalen Koordinaten (X, Y, Z) von zumindest einem Brauenpunkt (P23 bis P26) im Augenbrauenbereich oberhalb des jeweiligen Auges gemessen werden und daß die Brille mit einer Sollstellung jedes Brillenglases (30, 32) hergestellt wird, in der dieses außer den Mindestabständen zum Wangenpunkt (P27, P28) und der durch die Nasenpunkte (P8, P9, P12 bis P15) definierten Fläche auch einen vorgegebenen Mindestabstand vom naheliegendsten Brauenpunkt einhält.

7. Verfahren nach Anspruch 6, dadurch gekennzeichnet daß einer der gemessenen Brauenpunkte (P23, P24) senkrecht oberhalb der Augenmitte (6, 8) des jeweiligen Auges liegt.

8. Verfahren nach Anspruch 6 oder 7, dadurch gekennzeichnet, daß einer der gemessenen Brauenpunkte (P24, P26) im Augenbrauenbereich nahe der Nase liegt.

9. Verfahren nach einem der Ansprüche 1 bis 8, dadurch gekennzeichnet, daß die Messung der dreidimensionalen Koordinaten der Augenmitten, der Nasenpunkte, der Wangenpunkte und der Marken sowie gegebenenfalls der Brauenpunkte gleichzeitig erfolgt.

10. Verfahren nach einem der Ansprüche 1 bis 9, dadurch gekennzeichnet, daß die Messung der dreidimensionalen Koordinaten der Augenmitten, der Nasenpunkte und der Wangenpunkte sowie gegebenenfalls der Brauenpunkte ohne Berührung der Augen bzw. der Wagen bzw. der Nase bzw. der Brauen des Brillenträgers erfolgt.

11. Verfahren nach einem der Ansprüche 1 bis 10, dadurch gekennzeichnet, daß zur Dimensionierung der Bügel der Brille zusätzlich für jedes Ohr die dreidimensionalen Koordinaten des oberen Ohrwurzelpunktes (P1, P2) am Übergang zwischen Schädel und Ohrmuschel des Brillenträgers gemessen werden, daß aus dieser Ohrwurzelpunktmessung für den jeweiligen Bügel (48) der Ort des Bügelübergangspunktes (BU), an dem der vor dem Ohr befindliche Bügelabschnitt (50) übergeht in das Bügelendstück (52) und der sich oberhalb des oberen Ohrwurzelpunktes befindet, im Raum bestimmt wird und daß die Brille mit diesem bestimmten Ort des Bügelübergangspunktes hergestellt wird.

12. Verfahren nach Anspruch 11, dadurch gekennzeichnet, daß die Ohrwurzelpunktmessung gleichzeitig mit der Nasenpunktmessung erfolgt.

13. Verfahren nach Anspruch 11 oder 12, dadurch gekennzeichnet, daß die Ohrwurzelpunktmessung ohne Berührung der Ohren des Brillenträgers erfolgt.

## Claims

1. A method for making an individually adapted pair of spectacles, wherein a three-dimensional coordinate system is assigned to the face of the spectacle wearer, wherein the face of the spectacle wearer is optically measured when viewed substantially from the front for the measurement and making of the central portion and the ear pieces of the spectacles, wherein at least the three-dimensional coordinates (x, y, z) of the following points are ascertained:
a) the two eye centres (6, 8);
b) respectively three nose points (P8, P9, P12, P13, P14, P15) defining a surface at, or near a first contact surface (40, 42) of each nose side intended for contact with the bearing surface (38) of one of two bridges (34, 36) of the spectacles,
c) one cheek point each (P27, P28) in the cheek zone below each eye from which the nearest area of the spectacle lens or of the rim is intended to keep a minimum distance;
d) two marks (M1 to M4), respectively, of two feelers (60) each of which is applied to a second contact surface intended behind the respective ear for contact with an ear piece end portion and which projects from the zone shaded by the ear and skull,
and wherein the spectacles are made from individual components of an appropriate shape and size on the basis of the measurements ascertained in this way.

2. A method according to claim 1,
**characterized in that**
the measured cheek point (P27, P28) lies vertically below the eye centre (6, 8) of the respective eye.

3. A method according to claim 1 or 2, wherein a desired position is specified for the two spectacle lenses (30, 32) relative to the eye centres (6, 8) in which the spectacle lenses do not touch the face of the spectacle wearer,
**characterized in that**
the desired position of the spectacle lenses is specified in such a way that one at first checks whether the spectacle lenses, when spaced from the eye centres at a first distance associated with their dioptric effect, keep to minimum distances from the areas defined by the nose points (P8, P9, P12 to P15) and the cheek points (P27, P28) and, depending on the result, that either this first distance is specified as the distance from the eye centres in the desired position if the minimum distances are maintained, or if at least one minimum distance is not maintained, the checking of the minimum distances is repeated with a second distance increased as compared to the first distance, until the minimum distances are maintained, and that then that second distance whereat the minimum distances are maintained, is specified as the distance from the eye centres in the desired position, and in that the spectacles are made with a spatial relationship between the spectacle lenses and at least one bridge (34, 38) as resulting from this desired position and the position and orientation of the bearing surface (38) of the bridge.

4. A method according to claim 3 for the making of a pair of spectacles with correcting effects for which the dioptric effects of the spectacle lenses are prescribed by prescription values,
**characterized in that**
the spectacle lenses (30, 32) are made with dioptric effects that are corrected, starting with the prescription values, in accordance with the specified desired positions with which the spectacles are made.

5. A method according to one of claims 1 to 4,
**characterized in that**
for the measurement of the nose point, two of the three coordinates (X, Y, Z) of the respective nose point (P3 to P9, P12 to P15) are specified and the associated third coordinate is sought.

6. A method according to claim 3 or 4,
**characterized in that**
for each eye, the three-dimensional coordinates (X, Y, Z) of at least one eyebrow point (P23 to P26) are measured in the eyebrow zone above the respective eye, and in that the spectacles are made having a desired position of each spectacle lens (30, 32), wherein the latter also maintains a specified minimum distance from the nearest eyebrow point, apart from the minimum distances to the cheek points (P27, P28) and the area defined by the nose points (P8, P9, P12 to P15).

7. A method according to claim 6,
**characterized in that**
one of the measured eyebrow points (P23, P24) lies vertically above the eye centre (6, 8) of the respective eye.

8. A method according to claim 6 or 7,
**characterized in that**
one of the measured eyebrow points (P24, P26) lies near the nose in the eyebrow zone.

9. A method according to one of claims 1 to 8,
**characterized in that**
the three-dimensional coordinates of the eye centre of the nose points, the cheek points and the marks, and of the eyebrow points if required, are measured simultaneously.

10. A method according to one of claims 1 to 9,
**characterized in that**
the three-dimensional coordinates of the eye centres, nose points and cheek points, and of the eyebrow points if required, are measured without touching the eyes, cheeks, nose, or eye-brows, respectively, of the spectacle wearer.

11. A method according to one of claims 1 to 10,
**characterized in that**
for dimensioning the sides of the spectacles, there are additionally measured for each ear, the three-dimensional coordinates of the upper root point (P1, P2) of the ear at the transition between the skull and the auricle of the spectacle wearer, in that, from this measurement of the root point of the ear, one determines for the respective side (48) the position in space of the earpiece transition point (BU) at which the side section (50) situated ahead of the ear passes into the ear piece end portion (52), which point is situated above the upper root point of the ear, and in that the spectacles are made with this determined position of the side transition point.

12. A method according to claim 11,
**characterized in that**
the measurement of the ear root point is effected simultaneously with the measurement of the nose point.

13. A method according to claim 11 or 12,
**characterized in that**
the measurement of the ear root point is effected without touching the ears of the spectacle wearer.

## Revendications

1. Procédé de fabrication de lunettes adaptées individuellement, un système de coordonnées tridimensionnelles étant associé au visage du porteur de lunettes, le visage de ce porteur de lunettes étant relevé optiquement en étant observé de face pour mesurer et fabriquer la partie centrale et les branches des lunettes, les coordonnées tridimensionnelles (x, y, z) étant déterminées au moins par les points suivants :
a) les deux centres (6, 8) des yeux ;
b) trois points du nez (P8, P9, P12 P13, P14, P15) définissant une surface dans ou à proximité d'une première surface de contact (40, 42) de chaque aile du nez qui est prévue pour le contact avec la surface d'appui (38) de l'une des deux plaquettes de lunettes (34, 36) ;
c) un point de joue (P27, P28) dans la région des joues au-dessous de chaque oeil, et à partir duquel la surface du verre de lunettes ou la surface de la monture la plus proche doit être maintenue à une distance minimale ;
d) chaque fois deux marques (M1 à M2) de deux palpeurs (60), dont chacune est apposée sur une seconde surface de contact qui est déterminée derrière l'oreille concernée pour le contact avec la manchon de la branche et fait saillie de la zone cachée par l'oreille du crâne,
les lunettes étant fabriquées sur la base des mesures ainsi déterminées au moyen d'éléments individuels de formes et de dimensions appropriées.

2. Procédé selon la revendication 2, caractérisé en ce que le point de la joue (P27, P28) qui a été mesuré est disposé verticalement au-dessous du centre (6, 8) de l'oeil respectif.

3. Dispositif selon la revendication 1 ou 2, dans lequel est prédéterminée pour les deux verres de lunettes (30, 32) une position de consigne par rapport aux centres (6, 8) des yeux dans laquelle les verres de lunettes ne sont pas en contact avec le visage du porteur, caractérisé en ce que la position de consigne des verre de lunettes est prédéterminée en contrôlant d'abord si les verre de lunettes, quand ils sont à une première distance des centres des yeux qui est associée à leur effet dioptrique, conservent les distances minimales par rapport aux surfaces définies par les points du nez (P8, P9, P12 à 15) et les points des joues (P27, P28), et ensuite, dans le cas où les distances minimales sont maintenues, cette première distance est déterminée en tant que distance à partir des centres des yeux dans la position de consigne, ou dans le cas où au moins une distance minimale n'est pas maintenue on répète le contrôle des distances minimales en les comparant avec une seconde distance plus importante que la première distance jusqu'à ce que soient maintenues les distances minimales, et ensuite cette seconde distance pour laquelle sont maintenues les distances minimales est prédéterminée en tant que distance à partir des centres des yeux dans la position de consigne, et en ce que les lunettes sont fabriquées en tenant compte d'une relation dans l'espace entre les verre de lunettes et l'une au moins des plaquettes (34, 36) qui est obtenue à partir de cette position de consigne et de l'emplacement et de l'orientation de la surface d'appui de plaquette (38).

4. Dispositif selon la revendication 3, prévu pour la fabrication de lunettes à effet correcteur dans laquelle les effets dioptriques des verres ont été prescrits par des valeurs d'ordonnance, caractérisé en ce que les verre de lunettes (30, 32) sont fabriqués selon des effets dioptriques qui sont corrigés en partant des valeurs prescrites par les positions de consigne prédéterminées au moyen desquelles sont fabriquées les lunettes.

5. Procédé selon l'une quelconque des revendications 1 à 4, caractérisé en ce que pour la mesure des points du nez, on détermine deux des trois coordonnées (X, Y, Z) du point de nez respectif (P3 à P9, P12 à P15) et en ce qu'on recherche la troisième coordonnée associée.

6. Dispositif selon l'une quelconque des revendications 3 ou 4, caractérisé en ce que l'on mesure pour chaque oeil les coordonnées tridimensionnelles (X, Y, Z) d'au moins un point (P23 à P26) des sourcils dans la région des sourcils située au-dessus de l'oeil considéré, et en ce que les lunettes sont fabriquées avec une position de consigne de chaque verre (30, 32) selon laquelle ce verre conserve également une distance minimale prédéterminée par rapport au point de sourcil le plus proche en dehors des distances minimales par rapport au point (P27, P28) de la joue et de la surface définie par les points (P8, P9, P12 à P15) du nez.

7. Procédé selon la revendication 6, caractérisé en ce que l'un des points de sourcil (P23, P24) qui a été mesuré est situé perpendiculairement au-dessus du centre (6, 8) de l'oeil considéré.

8. Dispositif selon la revendication 6 ou 7, caractérisé en ce que l'un des points de sourcil (P24, P26) qui est mesuré est situé dans la région des sourcils à proximité du nez.

9. Dispositif selon l'une quelconque des revendications 1 à 8, caractérisé en ce que les mesures des coordonnées tridimensionnelles des centres des yeux, des points du nez et des points des joues ainsi qu'également des points de sourcils, s'effectuent simultanément.

10. Dispositif selon l'une quelconque des revendications 1 à 9, caractérisé en ce que la mesure des coordonnées tridimensionnelles des centres des yeux, des points du nez et des points des joues ainsi qu'éventuellement des points des sourcils s'effectue sans contact avec les yeux, les joues, le nez ou les sourcils du porteur de lunettes.

11. Dispositif selon l'une quelconque des revendications 1 à 10, caractérisé en ce que pour dimensionner les branches des lunettes, on mesure en outre pour chaque oreille les coordonnées tridimensionnelles du point de racine supérieur des oreilles (P1, P2) au niveau de la transition entre le crâne et le pavillon des oreilles du porteur de lunettes, en ce que partant de cette mesure du point de racine de l'oreille on détermine dans l'espace pour chaque branche (48) l'emplacement du point de transition (BU) ou la section de branche (50) qui se trouve à l'avant de l'oreille se prolonge par le manchon (52) des branches et se trouve au-dessus du point supérieur de la racine de l'oreille, et en ce que les lunettes sont fabriquées en tenant compte de cet emplacement déterminé du point de transition des branches.

12. Dispositif selon la revendication 11, caractérisé en ce que la mesure du point de racine des oreilles s'effectue en même temps que la mesure des points du nez.

13. Dispositif selon la revendication 11 ou 12, caractérisé en ce que la mesure du point de la racine des oreilles s'effectue sans contact avec les oreilles du porteur de lunettes.
